# EUROPEAN PATENT APPLICATION

(11) **EP 3 205 386 A1**
(43) Date of publication of application: **16.08.2017**
(21) Application number: 15835081.9
(22) Date of filing: 24.04.2015
(51) Int. Cl.: B01D 50/00, B01D 47/02, B01D 53/62, B01D 53/78, F01N 3/04

(54) **AIR-PURIFICATION DEVICE USING LIQUID REDUCING AGENT, AND OPERATION AND APPLICATION METHOD THEREFOR**

(30) Priority: 25.08.2014 CN 201410422339
(71) Applicant: Tianjin Northern Huigu Science and Technology Co., Ltd., Heping District Tianjin 300051 (CN)
(72) Inventor: DUAN, Hongchi, Tianjin 300051 (CN); ZHAO, Kongquan, Wuhai, Inner Mongolia 016000 (CN)
(74) Representative: Ström & Gulliksson AB
(86) International application number: PCT/CN2015/000286
(87) International publication number: WO 2016/029620

(57) **Abstract**

Provided is an air-purification device using a liquid reducing agent, comprising a pollution gas suction opening (3), a pollution gas purifying cavity (1) and a clean gas exhaust opening (11), wherein the pollution gas purifying cavity (1) is divided into a plurality of cavity bodies by a plurality of semi-plate-porous pollution-particle vertical isolation plates (7); a pollution cleaning liquid is placed in the pollution gas purifying cavity (1); one end of the semi-plate-porous pollution-particle vertical isolation plate (7) is closed, and one end thereof is in communication with two adjacent cavities through pores; and the pollution gas suction opening (3) and the clean gas exhaust opening (11) are respectively arranged on the first and last two cavities.

## Description

### (I) Technical Field

The present invention belongs to the field of energy saving and environment protection, and particularly to an air-purification device using a liquid reducing agent and an operation and application method therefor.

### (II) Background Art

Extensive use of external combustion engines and internal combustion engines promotes modern industry. Various external combustion engines and internal combustion engines exhaust large amounts of waste gases into atmosphere through chimneys and gas exhaust pipes, resulting in more and more serious pollutions to the atmosphere. While they play a great role in promoting the world economy development, various pollutants and carbon dioxide they exhaust cause deterioration of atmospheric environment, global warming, and hurricane raging, and various kinds of extreme weather occur frequently around the world, producing great harm to body health of human beings and various animals. Large amounts of heat energy, contained in the waste gases exhausted by the external combustion engines and the internal combustion engines, are also exhausted to the atmosphere with the waste gases, and this is a direct important reason for the current atmospheric warming. The exhausted carbon dioxide causes gradual increase of the concentration of the carbon dioxide gas contained in the air, leading to atmospheric warming and higher and higher frequency of occurrence of extreme weather, unceasingly destroying life and property of the human beings, and also deracinating a plurality of animals and plants. For many years, a lot of efforts have been made therefor in the science and technology in the world, many technological progresses and achievements have been achieved and applied to practice, and a pollutant discharge rate of a single machine is greatly reduced. However, as the total quantity of the single machine grows significantly, the total quantity of the exhausted waste gases grows significantly, the atmosphere is severely polluted, natural air and environment are sharply deteriorated, and healthy living of the human beings is under serious threat; excessive consumption of fossil fuels causes the energy crisis to become increasingly severe. For this worldwide problem, there are a lot of invention creations, among which, one energy-saving and emission-reducing technology comprises ignition and combustion after decomposing water into H and O by a catalyst carrier which can decompose a waster molecule into H and O, utilizing that the molecular composition of water is H₂O which is in a carbon-free molecular structure, and it has been granted. This technology was proved by laboratory experimental results and demonstration of instrument operation, but during specific practical development, it could not meet practical requirements of real vehicles, therefore, the development was declared a failure; another energy-saving and emission-reducing technology comprises adding 30-60% of water to fuel oil and performing high-frequency electron-excitation for blending to provide a water emulsified oil, and such emulsified liquid fuel obtained through adding water to the oil and performing high-frequency blending has very good use effects during development tests, not only saving a lot of oil, but also meanwhile being able to dissipate heat of and cool relevant parts of an engine from inside of a cylinder body during the operation, reducing wear rates of parts such as the cylinder, piston and so on, and prolonging the service life. Long-term experiments prove good effects. The experimental results at home and abroad are consistent. However, since such oil-water blending liquid fuel obtained after adding water and emulsifying cannot be stored over a long period of time for being unusable due to delamination of oil and water after long-term storage, the technological product of such water emulsified oil is unable to achieve social commercialized application, and is failed in social commercialization and development.

On the basis of summarizing experience of success and failure of the above technologies and a plurality of other energy-saving and emission-reducing technologies, inventors of the present invention found an idea and a technological method of water blended combustion which can be used for social commercialization, *i.e.* adding a technical system of water blended combustion comprising a blended combustion water tank, a high-pressure water pump and a water spray nozzle to an automobile or a device using an internal combustion engine as power. Firstly, an engine is started and pre-heated using regular fuel oil, then this system is started to inject vary fine particles of water into a gas inlet pipe of the engine to form highly atomized water-gas mixture, which is mixed with the injected highly-refined fine particles of regular fuel oil, enabling mixed gas of three fuels gas, water, and oil to burn together in a cylinder, and achieving the object of saving energy and reducing emission through working of water blended combustion. The working principle of this technology is substantially the same as the working principle of the above water-blended emulsion oil for combustion, both working through combined combustion of refined mixture of three fuels gas, water, and oil, only with differences of different procedures and application methods of water blended combustion, so that the problem of delamination of oil and water is solved, and practicability is achieved. Therefore, a patent for invention of the water blended combustion technology, in which water is injected into a gas inlet pipe after starting and warming up an engine, was filed, entitled "Engine Energy-saving and Emission-reducing System Coordinated by Heat Pipe and Cold Pipe and Working Method thereof", with the patent application number "200910069554.6". This application has been granted by the SIPO after nearly 5 years of strict examination and reexamination procedures.

During the period of waiting for the examination, reexamination and further examination, the inventors made simple experiments about their own application technology above, and obtained practical verification and further creations and developments for the above technology during the experiments, and these creations and developments are as follows:
during the practicing of developing the above technology for which an invention was filed, on one hand, the technology of the above application is proved to be feasible, on the other hand, another creation and development in the aspect of "carbon emission reducing technology" are achieved, and a multipurpose air-purification device using a liquid reducing agent having highly outstanding pollution-cleaning and purifying capacity was invented, wherein the device not only is able to perform pollution cleaning and purifying processing on the atmosphere which has been polluted currently, but also is able to make an external combustion engine absolute achieve absolute zero pollution and make an internal combustion engine achieve relative zero pollution. The waste gases exhausted by the external combustion engine and the internal combustion engine contained heat energy and numerous water in a vapor state, therefore, the inventors made full use of functions of such air-purification device, to develop this technology to not only to be applied to purifying processing on the atmosphere, indoor air and pollution gases for individual inhalation, but also to be able to be applied to pollution cleaning and purifying processing of waste gases exhausted by various combustion devices, so that the functions of this air-purification device are brought into full play and utilization, not only enabling the external combustion engine to no longer exhaust waste gases to the outside, achieving absolute zero pollution, but also enabling the internal combustion engine to exhaust little clean waste gases obtained after purification processing to the outside to achieve relative zero pollution, and greatly saving the energy.

### (III) Disclosure of the Invention

An object of the present invention is to provide an air-purification device using a liquid reducing agent and an operation and application method therefor, and it can overcome deficiencies of the prior art, effectively eliminate fine particles (PM 2.5), micro-particles (PM 0.5), and carbon dioxide in the air, has a simple and practical structure, and has good purifying effects.

A technical solution of the present invention is as follows: an air-purification device using a liquid reducing agent is characterized in that the device comprises a pollution gas intake (pollution gas intake), a pollution gas purifying cavity and a clean gas exhaust opening, wherein the pollution gas purifying cavity is divided into a plurality of cavity bodies by at least one semi-plate-porous pollution-particle vertical isolation plates; a pollution cleaning liquid is contained in the pollution gas purifying cavity; the semi-plate-porous pollution-particle vertical isolation plate has one half configured for sealing and the other half configured for making two adjacent cavity bodies in communication through pores (one end of the semi-plate-porous pollution-particle vertical isolation plate is closed, and one end thereof is in communication with two adjacent cavities through pores); and the pollution gas intake and the clean gas exhaust opening are respectively located on first one and last one of the cavity bodies.

When there is one semi-plate-porous pollution-particle vertical isolation plate, the pollution gas purifying cavity is divided into two cavity bodies; and a part of the semi-plate-porous pollution-particle vertical isolation plate located above the pollution cleaning liquid is configured for sealing, and a part of the semi-plate-porous pollution-particle vertical isolation plate located below the pollution cleaning liquid, in combination with a full-plate-porous transverse isolation plate having pores leading to below the cavity, makes the two cavity bodies in communication; and
when there are more than two semi-plate-porous pollution-particle vertical isolation plates, parts of a first and a last semi-plate-porous pollution-particle vertical isolation plates located above the pollution cleaning liquid are configured for sealing, and parts of the first and the last semi-plate-porous pollution-particle vertical isolation plates located below the pollution cleaning liquid, in combination with a full-plate-porous transverse isolation plate having pores leading to below the cavity, makes the two cavity bodies in communication, and between the first and the last semi-plate-porous pollution-particle vertical isolation plates, the semi-plate-porous pollution-particle vertical isolation plates in a form of communicating in an upper part and sealing in a lower part and the semi-plate-porous pollution-particle vertical isolation plates in a form of communicating in a lower part and sealing in an upper part are alternately disposed and spaced from each other.

A pollution cleaning liquid quantity display tube is mounted on a side wall of the pollution gas purifying cavity; pollution cleaning liquid quantity limit marks are provided on the pollution cleaning liquid quantity display tube; and an electric pollution cleaning liquid temperature regulator is mounted in a part of the pollution gas purifying cavity in which the pollution cleaning liquid is contained;
a bottom of the pollution gas purifying cavity is connected with a sludge accumulating chamber through a full-plate-porous pollution-particle transverse isolation plate; pollution cleaning helical shovels are mounted at a bottom inside the sludge accumulating chamber; the pollution cleaning helical shovels are connected with a helical shovel motor; a sludge discharge transition chamber is connected with the bottom of the sludge accumulating chamber; a sludge discharge switch is provided at a discharge opening of the sludge discharge transition chamber; the sludge discharge switch is connected with a sludge discharge switch handle; and one end of the sludge discharge switch handle is corresponding to a toggle motor switch; and
the pollution gas purifying cavity and the sludge accumulating chamber are both placed inside a purification-device stored-liquid temperature-regulation tank (stored liquid temperature regulation tank of a purification device).

A pollution cleaning liquid adding opening is provided at a top of the pollution gas purifying cavity.

The electric pollution cleaning liquid temperature regulator and the helical shovel motor are both connected with an alternating current wiring board; and the alternating current wiring board is connected with an on-off electric switch, a pollution cleaning operation display lamp, a pollution cleaning stop display lamp and a toggle motor switch.

The cavity body connected with the pollution gas intake is a pollution gas suction cavity; a pollution gas multipath blow-pipe set is mounted in an upper portion of the pollution cleaning liquid in the pollution gas suction cavity;
the cavity body connected with the clean gas exhaust opening is a clean gas exhaust cavity; a porous pollution-particle secondary isolation plate is mounted in an upper portion of the pollution cleaning liquid in the clean gas exhaust cavity; a pollution-particle blocking, sticking and sliding-down barrel is mounted above the porous pollution-particle secondary isolation plate; and a clean-air turning inward-rotating exit is provided at a top of the pollution-particle blocking, sticking and sliding-down barrel.

A pollution gas pressurizer is mounted at the pollution gas intake.

A pollution degree indicator is mounted at the pollution gas intake; a purification level indicator is mounted at the clean gas exhaust opening; and the pollution degree indicator and the purification level indicator are both connected with the alternating current wiring board.

The pollution gas intake is connected with a chimney of an external combustion engine; and the clean gas exhaust opening is connected with a gas inlet passage of the external combustion engine.

The gas inlet passage of the external combustion engine is connected with an inlet gas pre-heater; a gas inlet is provided on the inlet gas pre-heater.

The pollution gas intake is connected with a gas exhaust pipe of an internal combustion engine; the clean gas exhaust opening is connected with a three-way dual-purpose gas exhaust pipe; an input end of a transition gas exhaust outlet of the three-way dual-purpose gas exhaust pipe is connected with an output end of the clean gas exhaust opening, an output end of the transition gas exhaust outlet is connected with an outlet of the three-way dual-purpose gas exhaust pipe and an input end of an exhausted gas-pressurizing gas inlet respectively, an output end of the exhausted gas-pressurizing gas inlet is connected with a gas inlet pipe of the internal combustion engine and an input end of an exhausted gas-depressurizing gas relief outlet respectively; an output end of the exhausted gas-depressurizing gas relief outlet is connected with an input end of a bridge coordinating gas-guide tube; and an output end of the bridge coordinating gas-guide tube is connected with the three-way dual-purpose gas exhaust pipe;
an exhausted-gas diverting pressurizing change-over valve is mounted between an output end of the transition gas exhaust outlet and an input end of the exhausted gas-pressurizing gas inlet; the exhausted-gas diverting pressurizing change-over valve is connected with an exhausted-gas diverting pressurizing actuator; the sludge discharge switch handle is connected with a signal inductive switch actuator;
a dirt concentration sensor is provided in the sludge accumulating chamber; the discharging opening of the sludge discharge transition chamber is corresponding to a sludge receiving box;
all of the exhausted-gas diverting pressurizing actuator, the dirt concentration sensor, and the signal inductive switch actuator are connected with a microcomputer; and
all of the electric pollution cleaning liquid temperature regulator, the helical shovel motor, the exhausted-gas diverting pressurizing actuator, the dirt concentration sensor, the signal inductive switch actuator and the microcomputer are connected with a battery; the battery is connected with an energy recycling switch, a recycling-operation-performing display lamp, a recycling-operation-stop display lamp and a toggle motor switch.

A switch for regularly discharging water in lubricant is provided at a bottom of the internal combustion engine.

The internal combustion engine is embodied as a gasoline engine or a diesel engine; a gas inlet regulating valve is mounted at a gas inlet of the gasoline engine; an inlet gas pressurizing control valve and an anti-explosion coordinating gas relief valve are mounted in the bridge coordinating gas-guide tube; the gas inlet regulating valve is connected with a pedal through a gas inlet regulating valve transfer bar, and the inlet gas pressurizing control valve is connected with the pedal through an inlet gas pressurizing control valve transfer bar; a fuel injection nozzle of the diesel engine is connected with a high-pressure diesel pump, and the high-pressure diesel pump is connected with a fuel injection quantity regulating valve; and the fuel injection quantity regulating valve is connected with the pedal.

When the pollution gas purifying cavity is fabricated to be portable, the clean gas exhaust opening of the pollution gas purifying cavity is connected with a breathing dividing conjoined hose; the breathing dividing conjoined hose is constituted of a gas inlet pipe and a gas outlet pipe, a one-way gas inhalation valve is mounted at an output end of the gas inlet pipe, a one-way gas exhalation valve is mounted at an input end of the gas outlet pipe, and the output end of the gas inlet pipe and the input end of the gas outlet pipe are both connected with a breathing mask; an input end of the gas inlet pipe is connected with the clean gas exhaust opening, and an output end of the gas outlet pipe extends into the pollution cleaning liquid; a common opening for allowing gas to flow in and out and for adding pollution cleaning liquid is provided at the pollution gas intake of the pollution gas purifying cavity; a porous common opening cover is mounted on the common opening for allowing gas to flow in and out and for adding pollution cleaning liquid.

A strap is provided on an outer wall of the pollution gas purifying cavity; and the breathing mask is provided with a breathing mask flexible tightening belt.

The pollution cleaning liquid is embodied as an aqueous feldspar solution.

When there are more than two air-purification devices using a liquid reducing agent, the clean gas exhaust opening of a former one of two adjacent air-purification devices is connected with the pollution gas intake of a latter one.

The air-purification device using a liquid reducing agent is placed on a motor vehicle, and the motor vehicle is moved to a downwind place where various extra-concentrated pollution gases are temporarily produced.

An operation and application method for the air-purification device using a liquid reducing agent is characterized by comprising steps as follows:
(1) adding a pollution cleaning liquid into a pollution gas purifying cavity;
(2) making pollution gases enter the pollution gas purifying cavity through a pollution gas intake;
(3) the gases, from one cavity body of the pollution gas purifying cavity, entering another cavity body of the pollution gas purifying cavity, through the pollution cleaning liquid, and a semi-plate-porous pollution-particle vertical isolation plate; and
(4) exhausting the pollution gases after purified by the pollution cleaning liquid from a clean gas exhaust opening.

The pollution cleaning liquid is added by opening a cover on a pollution cleaning liquid adding opening on the pollution gas purifying cavity and adding an appropriate amount of the pollution cleaning liquid, wherein the appropriate amount refers to an amount between an upper limit and a lower limit of pollution cleaning liquid limit quantity marks marked on a pollution cleaning liquid quantity display tube, a power supply is turned on, the pollution gas intake is placed in pollution gases, then an on-off electric switch is pressed down, a pollution cleaning operation display lamp is turned on, at this time, a pollution gas pressurizer is powered on and starts rotating operation, the pollution gases enter the pollution gas pressurizer through the pollution gas intake for pressurization, and the pressurized pollution gases will enter the pollution gas purifying cavity placed in a purification-device stored-liquid temperature-regulation tank, and then injected into the pollution cleaning liquid by multiple paths of blow pipes of a pollution gas multipath blow-pipe set, at this time, the pollution gases and the pollution cleaning liquid are in a mixed state, thus, dusts, PM 10 inhalable particles, PM 2.5 fine particles and PM 0.5 micro-particles carried in the pollution gases are humidified to expand, so as to gain weight, sink down, be aggregated, be granulated, and be agglomerated, and then sink down to a sludge accumulating chamber through a plurality of pores on a full-plate-porous pollution-particle transverse isolation plate, and dirt particles which do not sink down timely may be blocked again when passing through the semi-plate-porous pollution-particle vertical isolation plate, so as to collide, be granulated, gain weight and sink down, and thus sink down to the sludge accumulating chamber through pores on the full-plate-porous pollution-particle transverse isolation plate; carbon dioxide contained in the pollution gases, during the process of mixing with the pollution cleaning liquid, undergoes neutralization and reduction reactions to form various solid-state carbonate substances, which are then humidified to expand, so as to gain weight, be aggregated, sink down, be granulated, and be agglomerated, and then sink down to the sludge accumulating chamber through a plurality of pores on the full-plate-porous pollution-particle transverse isolation plate, the pollution gases after the above processing procedures still may not be very clean, and still carry dirt particles, the semi-clean air carrying few fine dirt particles continues flowing in the pollution cleaning liquid toward a downstream position close to an outlet, and when passing through a porous pollution-particle secondary isolation plate to enter upwards a pollution-particle blocking, sticking and sliding-down barrel, the dirt particles are partially blocked again by the porous pollution-particle secondary isolation plate and sink into the sludge accumulating chamber, and afterwards, although the pollution gases have been already quite clean, but still contain few fine dirt particles, when these fine particles move upwards together with the gases along the pollution-particle blocking, sticking and sliding-down barrel, since the pollution-particle blocking, sticking and sliding-down barrel is a dome-shaped cylindrical body having a larger upper opening and a smaller lower opening, fine dirt particles are blocked and stuck on an inner wall of the dome-shaped cylindrical body, gradually are increased in size, weight and amount and thereby slide down, sink down into the pollution cleaning liquid through a plurality of pores on the porous pollution-particle secondary isolation plate, and continue sinking down into the sludge accumulating chamber through a plurality of pores on the full-plate-porous pollution-particle transverse isolation plate, and clean waste gases containing precious few fine dirt particles, when rising to a top end of the pollution-particle blocking, sticking and sliding-down barrel, are turned back and blocked at a clean-air turning inward-rotating exit to rotate transversely to go out, at this time, finer dirt particles are thrown to collide and stick on an inner wall of a relevant cavity body, so as to become bigger, gain weight, and slide down into corners where the purification-device stored-liquid temperature-regulation tank and the pollution-particle blocking, sticking and sliding-down barrel join, to be accumulated; solid-state carbonate particles together with floating dusts, PM 10 inhalable particles, PM 2.5 fine particles, and PM 0.5 micro-particles are humidified, deposited and accumulated, and become a porridge-like mixture when gradually accumulated enough, the mixture is intercepted and stored in the sludge accumulating chamber, and removed through the pollution cleaning helical shovels, and clean air obtained from the pollution gases is exhausted from the clean gas exhaust opening under a pressure generated by the pollution gas pressurizer.

The waste gases exhausted from the external combustion engine and pressurized by the pollution gas pressurizer are sucked in through the pollution gas intake, the waste gases pass through an inlet gas pre-heater during a path of being sucked in, to transfer most of heat in the waste gases to air entering from gas inlets, the air obtaining the heat enters a gas inlet passage through pipes, and then enters the external combustion engine to take part in combustion; after purified in the pollution gas purifying cavity to become clean air, the waste gases are exhausted through the clean gas exhaust opening to enter the gas inlet passage of the external combustion engine and be mixed with newly entered fresh heated air and then take part in the combustion again.

The waste gases, exhausted through an exhaust pipe after the internal combustion engine is started, are sucked in through the pollution gas intake, and the waste gases, after purified in the pollution gas purifying cavity to become clean air, are exhausted through the clean gas exhaust opening and guided into the transition gas exhaust outlet, and enter a three-way dual-purpose gas exhaust pipe to be exhausted out of the engine; after the internal combustion engine is started, preheated, and stabilized, an energy recycling switch is pressed down, at this time a recycling-operation-performing display lamp is turned on, an exhausted-gas diverting pressurizing actuator works after being turned on, an exhausted-gas diverting pressurizing change-over valve is manipulated to open the exhausted gas-pressurizing gas inlet, meanwhile the transition gas exhaust outlet on the three-way dual-purpose gas exhaust pipe is closed, at this time the clean waste gases exhausted from the clean gas exhaust opening are diverted to enter the gas inlet pipe from the exhausted gas-pressurizing gas inlet, the clean air, as a pressurized air jet flow, is used for directly pressurization in a gas inlet stroke of the internal combustion engine, and fresh air coming from the gas inlet pipe, as being driven by the air jet flow, also flows together with the air jet flow to enter a cylinder of the internal combustion engine.

When the gasoline engine is in use, the pedal is stepped down, a gas inlet regulating valve is driven by a gas inlet regulating valve transfer bar, so that the gas inlet regulating valve rotates from a minimum opening degree position towards a direction of a maximum opening degree position, so as to increase a gas inlet quantity and a fuel injection quantity, meanwhile, the inlet gas pressurizing control valve transfer bar connected with the pedal concurrently drives an inlet gas pressurizing control valve to rotate from a full-open position to a full-close position, and once the gas inlet regulating valve reaches the full-open position, the inlet gas pressurizing control valve reaches the full-close position;
during a process of operating the pedal for adjusting and controlling an operation state of the gasoline engine:
during speeding up at a low speed or a medium speed, with the speeding-up gentle, the waster gases, after being processed to become clean, completely re-enter the cylinder through the gas inlet pipe and the gas inlet regulating valve, therefore, all the exhausted clean waste gases are completely recycled;
in the case of medium and high speeds, as a total quantity of processed and cleaned waste gases is increased and a total quantity of newly entered fresh air is increased, when they may not completely enter the cylinder within a very short gas inlet stroke period due to the exceeded sum of mixed air of the waste gases and fresh air, the clean waste gases waiting to enter the cylinder are excessively accumulated in the gas inlet pipe, then the waste gases are squeezed into a bridge coordinating gas-guide tube from the exhausted gas-depressurizing gas relief outlet to enter the three-way dual-purpose gas exhaust pipe so as to be exhausted out of the engine, thus, although a little of clean waste gases are not recycled and thus wasted, an advantage is obtained that operation and working condition are well when using energy of the waste gases;
when the pedal is floored, the gas inlet regulating valve reaches the full-open position, so that the total inlet gas quantity reaches the highest, while the inlet gas pressurizing control valve at this time reaches the full-close position, so that a pressure of the recycled clean waste gases reaches the highest, the total inlet gas quantity obtained in the cylinder is very high due to that rushing in of the waste gases forms an inlet gas pressure, so that a power supplied by the gasoline engine is the highest;
when all the clean waste gases completely enter the cylinder at the highest pressure, deflagration phenomenon may occur, therefore, when a critical point at which the deflagration phenomenon may be induced is reached, an anti-explosion coordinating gas relief valve equipped on the inlet gas pressurizing control valve is used to release some high-pressure clean waste gases to reduce the total inlet gas quantity, which may prevent occurrence of the deflagration phenomenon of the engine, and these released clean waste gases are transferred to the three-way dual-purpose gas exhaust pipe through the bridge coordinating gas-guide tube to be exhausted out of the engine;
when the pedal is released suddenly or at a high speed from being floored and a gas inlet resistance becomes larger or rapidly becomes larger as the gas inlet regulating valve is turned down or rapidly turned down, the inlet gas pressure at the gas inlet regulating valve instantly quickly becomes larger, these clean waste gases with a larger pressure are squeezed into the bridge coordinating gas-guide tube from the exhausted gas depressurizing gas relief outlet, at this time the inlet gas pressurizing control valve has been already in a state from a semi-open position to a full-open position due to releasing of the pedal, and these clean waste gases are transferred to the three-way dual-purpose gas exhaust pipe from the bridge coordinating gas-guide tube to be exhausted out of the engine;
in 5-6 minutes before the operation of the gasoline engine ends, the energy recycling switch is turned off, and the recycling-operation-stop display lamp is turned on, at this time, an exhausted-gas diverting pressurizing actuator acts to make the exhausted-gas diverting pressurizing change-over valve open a transition gas exhaust outlet, and meanwhile close the exhausted gas-pressurizing gas inlet, so that the clean waste gases are not able to enter the gas inlet pipe and to thereby enter the cylinder, but directly enter the three-way dual-purpose gas exhaust pipe to be exhausted out of the engine.

Since the recycled clean air contains water of higher proportion compared with air, the water is mixed in a lubricant when running into an engine housing through an interface clearance of a piston ring, sinks down to a bottom of an oil pan when the engine is stopped to rest, and is accumulated increasingly, and when accumulated too much, a lubricant pump pumps the lubricant and water together into a lubricant path, therefore, the water accumulated at the bottom is discharged by a switch for regularly discharging water in lubricant; the switch for regularly discharging water in lubricant communicates with a hollow oil discharge screw plug through a transparent rubber tube, and the switch for regularly discharging water in lubricant is duly opened to discharge the water.

When the clean gas exhaust opening of the pollution gas purifying cavity is connected with a breathing dividing conjoined hose, firstly the pollution cleaning liquid, *i.e.* the aqueous feldspar solution, is added through a common opening for allowing gas to flow in and out and for adding pollution cleaning liquid provided at the pollution gas intake, until a liquid level reaches a position below and close to the full-plate-porous pollution-particle transverse isolation plate; then a user carries the portable simple air-purification device on his/her back through the strap, and then wears the breathing mask; when be inhaled, polluted air enters the cavity body at one side of the semi-plate-porous pollution-particle vertical isolation plate in the pollution gas purifying cavity from the common opening for allowing gas to flow in and out and for adding pollution cleaning liquid, and is able to enter the aqueous feldspar solution only by firstly passing through a plurality of pores on the full-plate-porous pollution-particle transverse isolation plate due to that the upper portion of the semi-plate-porous pollution-particle vertical isolation plate has no pores, at this time, dusts and PM 10, PM 2.5, and PM 0.5 particles in the pollution air are humidified to expand, so as to gain weight, be granulated, be agglomerated, and sink down to a bottom of the pollution gas purifying cavity, a trace amount of carbon dioxide contained in the air, when passing through the pollution cleaning liquid, undergoes neutralization and reduction reactions with the aqueous feldspar solution as the pollution cleaning agent, to generate solid-state carbonate substances, which sink down to the bottom of the pollution gas purifying cavity after being humidified, and the pollution-cleaned air rises to the cavity body at the other side of the semi-plate-porous pollution-particle vertical isolation plate in the pollution gas purifying cavity, and enters the breathing mask through a one-way gas inhalation valve from a gas inlet pipe of the breathing dividing conjoined hose, and then is inhaled into lungs through a nasal cavity to perform physiological exchange reactions; after the inhaled air performs the physiological exchange reactions of oxygen and carbon in the lungs, the oxygen contained in the air partly enters blood, and partly absorbs and combines with carbon in the blood and lung alveoli to become carbon dioxide, forming gases having a relatively high concentration of carbon dioxide, when the gases are pressurized and exhaled from lung cavities, the pressure of the gases closes the one-way gas inhalation valve and opens the one-way gas exhalation valve, and the gases enter the gas outlet tube of the breathing dividing conjoined hose, wherein the gas outlet tube of the breathing dividing conjoined hose has a length longer than a length of a right tube, and extends up to the bottom of the pollution gas purifying cavity, therefore, the gases containing carbon dioxide only can be exhaled from a lower end, the neutralization and reduction reactions are started after the exhaled gases enter the pollution cleaning liquid, the carbonate substances generated by making carbon dioxide react with other elements in the aqueous feldspar solution remain at the bottom of the pollution gas purifying cavity, and these gases, after leaving a pipe orifice at the bottom, rises upwards on one hand, and is mixed with the pollution cleaning liquid on the other hand, to make the aqueous feldspar solution in the pollution cleaning liquid carry out the neutralization reaction with the carbon dioxide in exhaled lung gases, to generate solid-state carbonate substances to sink down to the bottom, and the cleaned air rises to the upper portion of the pollution gas purifying cavity, and is exhaled through the common opening for allowing gas to flow in and out and for adding pollution cleaning liquid from a plurality of pores of a porous common opening cover, thus completing one respiration cycle.

The floating dusts, PM 10 inhalable particles, and PM 2.5 fine particles carried in the pollution gases are continuously accumulated in the sludge accumulating chamber, and observed through a pollution cleaning liquid quantity display tube made from a transparent material, and when the dirt needs to be discharged, a sludge discharge switch handle is pulled to make the sludge discharge switch reach a full-open state, at this time, one end of the sludge discharge switch handle presses against the toggle motor switch to connect the power supply with the helical shovel motor, and the helical shovel motor rotates to drive the pollution cleaning helical shovels to rotate, to force the dirt to move towards the sludge discharge transition chamber to allow continuous increase of a pressure, thus forcing the dirt to be discharged from the opened sludge discharge switch. When discharging of the dirt is completed, the sludge discharge switch handle is pulled to turn off the sludge discharge switch, and meanwhile to cut off a circuit between the helical shovel motor and the power supply so as to stop rotation, thus simultaneously to make the rotation of pollution cleaning helical shovels stop, ending one dirt discharging process;
alternatively, when the dirt concentration sensor senses that the dirt should be discharged from the sludge accumulating chamber, the dirt concentration sensor sends a signal to a microcomputer, the microcomputer, upon receiving the signal, sends an instruction to a signal inductive switch actuator to manipulate the sludge discharge switch handle to perform an opening action, in a later period of duration of the sludge discharge switch being opened, the other end of the sludge discharge switch handle triggers the toggle motor switch to make the power supply connected with the helical shovel motor, then, the helical shovel motor drives the pollution cleaning helical shovels to rotate, to push the porridge-like dirt stored at the bottom of the sludge accumulating chamber towards the sludge discharge transition chamber, and then to discharge the same through the opened sludge discharge switch to enter the sludge receiving box for storing; after the dirt has been discharged, the dirt concentration sensor sends a signal to the microcomputer, and the microcomputer sends a signal of closing the sludge discharge switch to the signal inductive switch actuator, then the signal inductive switch actuator makes the sludge discharge switch handle perform a closing action, and the sludge discharge switch is closed and does not discharge the dirt any more, meanwhile, the toggle motor switch is turned off, so that a connection circuit of the helical shovel motor with the power supply is cut off, and the helical shovel motor and the pollution cleaning helical shovels concurrently stop the rotation, completing one task of dirt discharge;
the sludge receiving box is mounted in a snapping mode, and is removed to be cleaned when it is full of dirt; and
the electric pollution cleaning liquid temperature regulator is mounted in a part of the pollution gas purifying cavity where the pollution cleaning liquid is contained, to maintain an operation temperature of the pollution cleaning liquid; and currently, the aqueous feldspar solution is used as the pollution cleaning liquid, at a temperature of 30-40 °C.

Technical effects of the present invention:
1. after the gasoline engine uses the present purification device, few clean waste gases are not recycled and wasted, but the effect of preventing occurrence of deflagration phenomenon is obtained, achieving the advantage of smooth operation; if the deflagration still occurs under such adjustment and control, the gas relief quantity of the anti-explosion coordinating gas relief valve is adjusted and increased in trial-manufacture to solve this problem, meanwhile, the microcomputers of general gasoline engines store technical measures for overcoming the deflagration phenomenon, such as delaying ignition, reducing the engine temperature and other methods, and they can be used for cooperatively preventing the occurrence of the deflagration phenomenon and timely eliminating the deflagration phenomenon after it occurs; in 5-6 minutes before the operation of the gasoline engine ends, the clean waste gases are enabled to directly enter the three-way dual-purpose gas exhaust pipe to be exhausted out of the engine, for the purpose of preventing stop of the operation, due to the case of too much water caused by the high concentration of water in the recycled clean waste gases entering the housing of the internal combustion engine through the interface clearance of the piston ring, and after 5 to 6 minutes of operation using the conventional gas inlet and outlet method, most of the water vapour entering the engine housing during the water blending operation are substantially eliminated, and then stopping the engine at this time may keep the degree of corrosion of internal parts of the engine during the rest to be substantially the same as the corrosion degree in the presence of few water before reformation.
   The gasoline engine realizes relative zero pollution at the very start of the start-up. It is called "relative zero pollution" because although the discharged waste gases having undergone the cleaning processing have a very high cleaning degree, they are not absolutely clean, but they are much cleaner than the current middle and lower atmosphere, and thus will not increase, after entering air of the middle and lower atmosphere, the pollution degree thereof, therefore, it is called "relative zero pollution" herein; the gas inlet pressure is greatly improved, so that the gas inlet quantity in each operation cycle is greatly increased under the adjustment and control of the gas inlet regulating valve, then an actual compression ratio of each operation cycle is greatly improved, and thus the power is improved, therefore, the object of saving the fuel oil can be achieved; the clean waste gases entering the cylinder in this way still contains vapor of water which is constituted of hydrogen and oxygen and which may, under the high temperature, high pressure and ignition conditions in the cylinder, be instantly degraded and then combined and burned to release heat for doing work, achieving the purpose of saving the fuel oil; by combining the above comprehensive effects of recycled kinetic energy and recycled heat energy and water, the internal combustion engine can be enabled to save 30-50% of the fuel oil. The present technology achieves relative zero pollution when starting and warming up the engine, while during the operation, there also is a closed cycle to be explained below, in which what takes part in the combustion is not only gases, but air which is not absolutely clean is frequently discharged to the outside, therefore, the internal combustion engine only achieves the relative zero pollution. If the gas exhaust pipe of the internal combustion engine is simply connected to a pollution gas purification device to directly discharge the gases, only can relative zero pollution be realized, but the fuel oil cannot be saved, and this can be quickly developed and is an effective method for quickly controlling pollution.
2. When it is used in the external combustion engine, a closed cycle with air taking part in combustion is realized, therefore, the waste gases are no longer discharged to the atmosphere, and absolute zero pollution is realized; since such clean waste gases contain heat energy and water, the heat energy thereof is not dissipated to the atmosphere as before, which greatly reduces the heat discharged to the atmosphere, and the heat, which would have been discharged to the atmosphere, re-enters the external combustion engine along with the clean waste gases, and is recycled, therefore, the use of the fuel is reduced, and the fuel is saved; the recycled clean air contains water which is in a vapor state, and when taking part in combustion, equivalently realizes water blended combustion, therefore, the fuel is saved; the water blended combustion technology of the external combustion engine utilizing a high-pressure water pump and a spray nozzle has passed the practical test, and the present method of water blended combustion is more advanced, since it can directly perform the water blended combustion without additionally providing a water tank, a high-pressure water pump and a spray nozzle, which is more simple. By the recycled heat energy and water energy above, about 15 to 20% of the fuel can be saved totally.
3. The medium- and small-size purification devices with a small flow rate can be applied to the indoor and passenger cars, and large- and super-large-size purification devices with a large flow rate can be applied to the outdoor. Such large air-purification devices can be used outdoors where the air cleaning degree is substandard, and the clean gases discharged after the sucked pollution gases have undergone the pollution cleaning processing have a higher cleaning degree than the air around the device, can dilute the polluted air around the device, and improve its cleaning degree, meanwhile the carbon dioxide in the discharged clean air is substantially eliminated; if the small- and medium-size purification devices are applied indoors, since the pollution degree of the sucked pollution gases is originally very low, the gases discharged after the pollution cleaning processing is cleaner, wherein the contents of the fine particles (PM 2.5) and the micro-particles (PM 0.5) becomes extremely low, and especially the carbon dioxide is substantially eliminated, so that the indoor air is cleaner.
4. A pollution gas purification device carried by a motor vehicle may work for a long term at places where the air pollution is severe usually, to maintain that the local air quality continuously reaches a standard. When a severe pollution event suddenly occurs, these large-size mobile pollution gas purification devices can be moved to a downwind place where various extra-concentrated pollution gases are temporarily produced for centralized use, to achieve the purpose of alleviating disasters.
5. The electric pollution cleaning liquid temperature regulator is provided for maintaining a certain operation temperature of the pollution cleaning liquid. Before the present technology is reported, in experiments, the aqueous feldspar solution was used, at a temperature of 30-40 °C, and the most suitable temperature should be determined according to different situations of different pollution cleaning liquids used during the development.
6. The discharged dirt is placed in a large storing barrel for storage and is to be sold to plants which use it as a production material.
7. The period for pollution cleaning of the pollution gases can be prolonged by increasing the length, the width and the height of the purification-device stored-liquid temperature-regulation tank, so that the discharged clean air reaches the "zero" pollution standard set in the present technical standard. This standard means that the discharged clean air does not increase the pollution degree of the air in the environment around the device, and should be capable of diluting the polluted air around the device so as to improve the cleaning degree of the air in the environment around the device, but it does not mean that the discharged clean air has been absolute clean. If this "zero" pollution standard still cannot be achieved, the standard can be achieved by a method of improving internal structures of the air-purification device.
8. Various mechanical structures, capable of intercepting most of the particles after the pollution gases are fully mixed with the pollution cleaning liquid, can be used, or a plurality of pollution gas purification devices are used in series, in parallel or in internal combination of both, and the standard can be achieved; while the above process is conducted, carbon dioxide in the pollution gases, upon neutralizing processing of the aqueous feldspar solution, becomes various solid-state carbonate substances, which are then humidified by water, to gain weight, sink down, be granulated, be agglomerated to thereby sink down to the bottom of the purification-device stored-liquid temperature-regulation tank, which is substantially the same as the process of the floating dust, inhalable particles (PM 10), fine particles (PM 2.5), and micro-particles (PM 0.5) in the above pollution gases being humidified to expand, gaining weight, sinking down, aggregating, granulating, agglomerating, and sinking down to sink down to the bottom of the purification-device stored-liquid temperature-regulation tank; these solid-state carbonate particles together with the dust, inhalable particles (PM 10), fine particles (PM 2.5), and micro-particles (PM 0.5) are humidified, deposited and accumulated, and become a porridge-like mixture when are gradually accumulated to a certain degree. When more than two purification devices are connected in series, it is equivalent to that the body of the device is transversely extended to form a plurality of gas cleaning chambers, and if one gas cleaning chamber cannot achieve the purification standard, a plurality of gas cleaning chambers are made to clean the pollution gases multiple times, finally making the purification degree achieve the required standard.
9. It can be manufactured as a portable simple air purifier capable of serving functions of reducing disasters and protecting health, with a volume and a shape easy to carry. The manufacturing material can be entirely transparent, so as to facilitate observing the adding quantity of the pollution cleaning liquid and the concentration of pollutants mixed and remaining in the pollution cleaning liquid, for timely replacing the pollution cleaning liquid. The pollution air around a user may be inhaled after filtering and cleaning by the device, so as to protect people's lungs and heart against injury by the pollution air. Since such air is substantially free of particles, during physiology exchange reactions, fine particles substantially will not infiltrate into lung alveoli, which protects the lungs from injury, and pollution to blood flowing through the lungs is less, and the injury to the heart and blood vessels is also less.

Such portable air purifier still also can be used as a standby anti-disaster emergency device at home or entertainment places in the case of fire disaster. For people escaping fire disaster, few are killed by skin burn, and most are killed because the inner wall of the lung tube is scalded by smoke entering the lung tube when breathing. If the portable air purifier is timely worn during the escape, the aqueous solution in the purifier can cool the inhaled smoke, and humidify the particles in the smoke to retain the same, then the cooled clean air, which does not bring that much harm to people's lungs, is inhaled into the lungs, which can prolong the escaping time and serve a function of reducing the disaster.

When it is observed from the outside of the pollution gas purification device made from a transparent material that the pollutants remaining in a lower cavity thereof result in a relatively high turbidity, the turbid pollution cleaning liquid can be poured out from the common opening for allowing gas to flow in and out and for adding pollution cleaning liquid, then clear water is added and shaken for cleaning so that the interior of the housing is clean, then new pollution cleaning liquid is added for further use.

If the user of this device works for a long period of time in a cold environment at a temperature below 0 °C, a portable simple heat preservation device should be assembled to prevent the pollution cleaning liquid prepared by using water as the basic material from freezing and thus being unable to work. Such heat preservation device is very simple, and a cotton-padded covering or an electric heat preservation sleeve and so on can be used.

Working principles of the present invention:
1. the working principles of the present multipurpose air-purification device using a liquid reducing agent are as follows: at present, carbon dioxide is eliminated by using the aqueous feldspar solution to neutralize and reducing the carbon dioxide in the pollution gases to provide solid-state carbonate substances, which are humidified to sink down and be intercepted; various pollutants in the air are eliminated by using an atmosphere auto-purification principle that rain water obtained during raining can humidify the inhalable particles in the air to make the same fall to the ground, and an atmosphere auto-purification principle that mainly makes use of wind force to blow various pollutant particles into ponds, lakes, rivers, and seas to wet the pollutants to thereby make them gain weight and sink down to underwater bottoms and so on. An air pollution cleaning device which makes water and pollution gases mixed to humidify, mix and intercept particles and then separate them, as described in the preceding and the figures, is manufactured. This device can make carbon smokes and various fine oxide particles, generated during combustion operations of various general combustion devices without a jet engine, humidified to expand, gain weight, sink down, be aggregated, be granulated, be agglomerated in pollution cleaning liquid, to deposit at the bottom of the purification-device stored-liquid temperature-regulation tank, so that the particles in the polluted air are separated from the air and the carbon dioxide is neutralized by the aqueous feldspar solution into various solid-state carbonate substances so as to eliminate the carbon dioxide, thus the polluted air become clean air;
2. in the pollution cleaning method "using a carbon dioxide reducing agent" as mentioned in the above "1 ", the aqueous feldspar solution is used in the pollution cleaning device as the reducing agent of carbon dioxide, which can perform neutralizing processing on the carbon dioxide in the waste gases to make the carbon in the carbon dioxide combine with various elements in the aqueous feldspar solution into solid-state carbonate substances, and such substances have a relatively heavy specific gravity, and they are humidified in the pollution cleaning liquid so as to gain weight, aggregate, sink down, be granulated, and be agglomerated to deposit to the bottom of the purification-device stored-liquid temperature-regulation tank, therefore, the clean air discharged after processed by the present pollution gas pollution cleaning device is substantially free of the element of carbon dioxide gas;
3. since nitrogen oxides have the property of being dissolved in water, the nitrogen oxides in the pollution gases and the combustion waste gases are dissolved in water as being humidified by water when passing through the pollution cleaning liquid, therefore, the nitrogen oxides in the waste gases substantially disappear;
4. since the present pollution gas pollution cleaning device converts the waste gases discharged by combustion devices into clean waste gases containing heat energy and water, when they are recycled by the external combustion engine, the heat energy partly is recycled to heat inlet gases through an inlet pre-heater, and partly is recycled by returning back into the engine along with the waste gases to take part in the combustion, and the water partly is recovered along with the waste gases and enters the engine and can burn, therefore, energy-saving effect can be achieved; all the waste gases can return back into the engine to take part in the combustion, to achieve a state of closed cycle, forming an absolute zero pollution operation state to the atmosphere of the waste gases produced during combustion;
5. as the internal combustion engine discharges the waste gases at a too quick speed, the waste gases cannot be completely, sufficiently and thoroughly cleaned in one-time pollution cleaning processing of the present pollution cleaning device, and thorough cleaning cannot be achieved through one-time pollution cleaning processing, but the cleaning level for re-taking part in the combustion in a closed cycle can be met, while the concentrations of carbon dioxide and various dirt in the clean air discharged outside are lower than or equal to the concentrations of carbon dioxide and various pollutants in the middle and lower atmosphere in a general state, but they are not absolutely clean, therefore, it is an operation state of relatively zero pollution. The clean waste gases recycled by the internal combustion engine not only contain the heat energy and water which can be recycled to take part in combustion to achieve the energy-saving effect, but also contain exhausted gas kinetic energy which can serve a function of pressurizing the gas inlet stroke so as to achieve greater energy-saving effect.
6. The liquid cooperating with a main structure serve a function of cleaning and purifying pollution, or the liquid is added with other preparations which can be taken away by the gases after being dissolved in the liquid. Various different liquids can be used according to technical objects. The solution is mainly aqueous feldspar solution in the initial stage of development. The aqueous feldspar solution having the function of decomposing molecular chain of carbon dioxide is a neutralizing and reducing agent of carbon dioxide. After the carbon dioxide in the pollution gases are mixed with the aqueous feldspar solution, the carbon elements therein will be neutralized by the aqueous feldspar solution into various solid-state carbonate substances, which are then humidified, with a specific gravity after humidification much greater than the specific gravity of water, so as to sink down, be aggregated, be granulated, be agglomerated, and sink down to the bottom in the pollution cleaning solution to be intercepted and stored; the solid-state oxide particles of multiple elements and solid-state particles having organic properties mixed in the pollution gases are totally humidified when going into the pollution cleaning solution along with the gases, so as to expand, gain weight, and then sink down, be aggregated, be granulated, be agglomerated, and sink down to the bottom to be intercepted and stored; the pollution gases, after having undergone the above procedure of separating gases and solid matters, can achieve highly purified effect. The filtering of such procedure is different from the existing filtering of gases through paper and membranes. Pores on the paper and the membrane, no matter how small they are, have diameters, and particles having a smaller diameter can pass through the pores, and such particles passing through are also pollutants, thus the filtered air still does not achieve the effect of being quite highly purified, moreover, the paper and the membranes are easily blocked off during operation, increasing the resistance for the gases to pass through, and being unfavorable to long-term normal filtering operation, thus, frequent cleaning is required. However, the present filtering method is a separating method by humidifying, weight-gaining and intercepting, which makes various particles contained in the pollution air totally humidified in the pollution cleaning liquid to expand, become bigger and heavier and sink down, and they are automatically accumulated and stored after being separated from the gases, so that the purification effect of the gases is higher, and the pollution gases can achieve a higher degree of purification effect.

The device of the present invention, after performing the pollution cleaning operation on the polluted air, can neutralize carbon dioxide to form solid-state compounds such as aluminum carbonate, calcium carbonate, sodium carbonate and so on, so that the carbon dioxide gases disappear after their molecular chains are decomposed, thus reducing emission of the carbon dioxide, moreover, the above various solid-state particulate carbonate substances can be intercepted and stored, and various other solid-state oxides contained in the pollution gases can be humidified to gain weight and sink down to the bottom to be intercepted and stored, so that the mixture of the two is accumulated increasingly to form into a porridge-like form. When a lot of the mixture is accumulated, a discharging machine is used to regularly discharge the mixture to the outside of the device for use as other industrial materials, thus various types of polluted air can be purified, for example, the device may perform purification operation on air in living rooms and meeting rooms, manned cabins of trains, automobiles, mail ships, submarines and so on, air in heavily polluted areas, air in areas with serious haze and air in areas with crowded vehicles and people; perform purification on the pollution gases inhaled by staff working in a heavily polluted air environment before entering the nose; perform purification on the waste gases discharged from external combustion engines and internal combustion engines; and perform purification on smokes generated in field burning, smokes generated by volcano, toxic gases generated in an accident of a chemical plant and so on. In particular, it may immediately recover the waste gases generated by the external combustion engine after purification in the device, for recycling in a closed cycle, realizing absolute zero pollution of the external combustion engine to the atmosphere; and recycle most of the waste gases generated in the internal combustion engine after purification in the device, for use, and discharge only a small part of relatively clean air out of the engine, realizing relative zero pollution to the existing atmosphere. Therefore, the present invention is a comprehensive technical method supporting sustaining improvement of air quality of the environment.

Application scopes are as follows:
1. such air-purification device can be used to operate in places for concentrated people living and activities such as bedrooms at home, hospital wards, halls, large and small meeting rooms, shopping malls, schools, kindergartens and so on, with the function that the device can suck carbon dioxide (CO₂) and indoor fine particles (PM 2.5), and micro-particles (PM 0.5), and make various particles in the air humidified in the aqueous pollution cleaning solution to expand, gain weight, sink down, be aggregated, be granulated, and be agglomerated, and sink down to the bottom to be intercepted and stored, in particular, may immediately humidify carbon in the carbon dioxide in the air, after neutralized into solid-state carbonate substances, in the pollution cleaning solution to sink down, be aggregated, be granulated, and be agglomerated, and sink down to the bottom to be intercepted and stored, and discharge clean air containing precious few fine particles (PM 2.5) and micro-particles (PM 0.5), achieving the function of protecting health of the human body; when people working in heavily polluted areas and people commuting to and from work use a portable simple air purifier manufactured using this principle, the pollution air can be inhaled into the human body after being purified, protecting people's lungs and heart against injury of pollution air.
2. In places where the air is heavily polluted and in places where is shrouded in haze, a plurality of large-size pollution gas purification devices of the present invention work simultaneously, and can suck a lot of floating dusts, inhalable particles (PM-10), fine particles (PM 2.5) and micro-particles (PM 0.5) in the air, and make various particles in the polluted air humidified to expand, gain weight, sink down, be aggregated, be granulated, be agglomerated, and sink down to the bottom to be intercepted and stored, in particular, it can neutralize carbon in the carbon dioxide in the polluted air into carbonate substances, which are immediately humidified to sink down, be aggregated, be granulated, and be agglomerated, and sink down to the bottom to be intercepted and stored in the pollution cleaning solution, and discharge clean air containing very few fine particles (PM 2.5) and micro-particles (PM 0.5). The clean air can dilute the polluted air and help to reduce the pollution degree of the atmosphere so that the air quality in this area is recovered to the cleaning degree in a normal state, and serves a function of relieving disaster;
3. the device of the present invention is manufactured as a simple portable small-size air purifier for use by staff working in places where air is heavily polluted, for example, traffic polices, sanitation workers, people working in environment where the air is polluted and people walking in hazy weather, to protect their heart and lungs, and also can be used as standby disaster relief device for escape of people in a place where a fire hazard suddenly occurs, for example, fire-prone entertainment places such as dance halls or theatres and so on;
4. the chimney of the external combustion engine or the gas exhaust pipe of the internal combustion engine is connected to a pollution gas suction pipe of the present device, so that the waste gases enter the present device to undergo the purification, to humidify various particles in the waste gases in the pollution cleaning solution to gain weight, sink down, be aggregated, be granulated, be agglomerated, and sink down to the bottom to be intercepted and stored, in particular, carbon in the carbon dioxide in the waste gases can be processed into solid-state carbonate substances, and they are immediately humidified to sink down, be aggregated, be granulated, be agglomerated, and sink down to the bottom to be intercepted and stored in the pollution cleaning solution. After the two types of dirt are deposited and accumulated into the porridge-like state, they can be discharged from the device for use as other industrial manufacturing materials so as to reduce emission of various pollutants to the atmosphere;
5. the waste gases discharged from the external combustion engine become relatively clean air after pollution cleaning processing, and are then delivered back to the gas inlet passage of the external combustion engine to continue to take part in the combustion, forming an in-engine closed cycle in which air takes part in the combustion, therefore, the external combustion engine no longer discharges carbon dioxide or other pollution particles to the outside, forming an operation state in which the gases after the combustion have absolute zero pollution to the atmosphere. In the recycled clean waste gases, as they contain heat energy and water, the recycling of the heat energy can save energy sources, and water can take part in the combustion to release heat, thus the energy sources can be saved, therefore, about 15-20% of the energy sources can be saved; the waste gases discharged from the internal combustion engine, after pollution cleaning processing, can become clean waste gases containing heat energy, water and kinetic energy, and most of them are immediately delivered back into the gas inlet pipe of the internal combustion engine to continue to take part in the combustion, and a small part of the clean waste gases are discharged out of the engine due to the requirement of coordinating smooth operation. Since the small part of clean waste gases which need to be discharged are not absolutely clean, but cleaner than the lower atmosphere which has been polluted, they will not increase the pollution degree of the lower atmosphere after discharged to the environment air, nevertheless, they are waste gases still having a small amount of pollutants after purification processing, thus realizing relative zero pollution. Since the waste gases used by the internal combustion engine contain heat energy, the recycling of the heat energy can save energy, and the water contained therein can burn to do work after recycled into the cylinder, therefore, the energy can be saved. The waste gases of the internal combustion engine contain exhausted pressure kinetic energy, and when recycled, can directly pressurize the inlet gas so as to improve the combustion efficiency, thus saving energy. Due to the three reasons above, it saves more energy sources than the external combustion engine, saving about 30-50% of the fuel oil;
6. the large-size air-purification devices can be mounted on multiple motor vehicles for use. At ordinary times, they are placed in places where the air pollution is relatively server to perform regular purification processing operation on the polluted atmosphere. In the cases of sudden occurrence of "field burning" smoke disasters, forest fire smoke disasters, volcanic eruption smoke disasters, chemical plant accident smoke disasters and so on, the devices are temporarily concentrated and driven in cluster to the downwind place, where the smoke is going, in the site of the smoke disaster, and suck the released smoky air as much as possible for purification processing, serving the function of relieving the disaster. Various detoxifying preparations for various toxic gases generated in chemical plant accidents can be prepared and stored in firefighting organs for standby use, and they perform targeted disinfection and purification processing on the polluted air in cases of fire in various chemical plants and serve the function of relieving the disaster. Of course, when the targeted disinfector has not been prepared, only using the common pollution cleaning solution to perform the disinfecting operation also can serve the function of relieving the disaster to a certain extent;
7. in the environment where there is an unusual smell of a chemical plant or a pharmaceutical factory, etc., this air-purification device is placed to operate. Adding a targeted detoxifying preparation and deodorizing preparation in the device can reduce damages of the toxic odor diffused in the air to workers and residents near the plant area, protecting the body health of the workers and the body health of the nearby residents;
8. in indoor places or centralized places where poultry and livestock are fed centrally, the present air-purification device is placed to process the polluted air, improving the product quality of the poultry and livestock; when a certain disease and plague prevail, a targeted medicine is added to the pollution cleaning solution, so that medicine molecules can be mixed in the clean air and diffused in the activity space of the poultry and livestock for breathing so as to treat the disease, thus the spread rates of the disease and the plague can be reduced, the disease resistance of most poultry and livestock is enhanced, and body health is maintained and recovered, therefore, only the poultry and livestock detected to carry bacteria in a serious degree or apparently sick need to be killed, but group killing is not needed, so that most of the livestock and poultry are conserved with the aid of the present device and survive healthily. When all of the living products of a certain livestock and poultry feeding unit are detected to have no epidemic pathogenic bacteria, the products can be sold and eaten, which achieves the purpose of relieving the disaster. Meanwhile, the healed poultry and livestock having relatively strong immunity may also improve immunity of human after being eaten;
9. according to the functions of the present pollution gas purification device, it can be used in a certain process in a production line by an appropriate manner for application, so as to meet corresponding technical requirements such as purifying gas or adding another substance in gas;
10. the device can be applied to other suitable devices, for example, to trains, cruises, submarines, medium- and large-size airliners which take an internal combustion engine as power and do not fly sidewards and backwards at a large angle and so on, and the technical measures for specific application can be reasonably designed according to the specific situation. Applying the present device to some suitable aeronautical devices can reduce pollution to the upper atmosphere.
11. The internal structure of the multipurpose air-purification device using a liquid reducing agent can be improved in various forms during the development, so as to improve the purification efficiency of the device to the pollution gas and increase its application scope. All such improvements fall within the claimed scope of protection.
12. For the indoor, outdoor and portable air purifiers, they can be made in a shape suitable to views and utilization of different groups.

Advantages of the present invention:
1. for the external combustion engines, the existing energy-saving and environment protection technologies generally only can save the energy and reduce the emission to a certain degree, but none of them can achieve the degree of absolute zero pollution to the atmosphere, however, using the present technology, regardless of the level of the fuel, the degree of absolute zero pollution to the atmosphere always can be achieved; while for the internal combustion engines, the degree of relative zero pollution can be achieved;
2. the existing emission-reducing technologies for the external combustion engines and the internal combustion engines generally only can provide the emission-reducing and environment protection benefits to a certain degree after being put into operation, but have no output benefit, however, the present technology not only can produce environment protection benefits but also can produce energy-saving benefits;
3. in the prior art, one patent technology generally can be used to produce one patent product, while in the present technology, one patent technology can be used to produce six series patent products, which can greatly save the patent annual fee;
4. among the existing atmosphere purifying technologies, there is no technical product which can directly reduce the carbon dioxide (CO₂) in the atmosphere, but in the present technology is provided a technical product which can directly reduce the content of carbon dioxide (CO₂) in the atmosphere;
5. the biggest advantage of the present invention is that the pollution air forced to enter the liquid capable of cleaning the pollution, so that all particles entering the pollution cleaning device can be humidified to gain weight and substantially retained, because no pores exist in the liquid, but the pollution gases can get into the liquid with any fine particles and are mixed with the liquid, after the mixing, the particles can be humidified to expand and gain weight, and are intercepted, therefore, extremely small particles also can be humidified and retained; in the existing dry paper filtering or membrane filtering methods, no matter how small the paper filtering holes or membrane filtering holes are, smaller particles always can pass through, therefore, completely thorough filtering cannot be achieved, moreover, the smaller the filtering holes are, the easier the blocking is, and cleaning and maintaining are also troublesome. Recent scientific experiments proved that the smaller particles have greater damage to the lungs of the human body, while the present method has the function of intercepting extremely small particles, reaching a commanding height of the current technologies for filtering the pollution air;
6. currently, the technologies of managing the atmospheric pollution caused by combustion devices in advanced countries such as Europe, America, Japan and so on are method of refining and upgrading oils, upgrading fuel such as using oil or gas instead of coal and so on. Such methods have a high cost, but only have the effect of reducing the discharged pollutants to a relatively high degree, however, the discharged waste gases still contain carbon dioxide and particulate pollutants. The present technology can achieve absolute zero pollution of the external combustion exhaust machine to the atmosphere. An external combustion engine combustion device reformed with the present technology, regardless of the grade of the fuel, can be used as long as the normal combustion and normal operation of the device are ensured. The discharged carbon dioxide and various fine particles can be decomposed and intercepted as described in the method of the description, to give clean waste gases for utilization in a closed cycle, forming an operation state of absolute zero pollution;
7. overall application of the technical method of the present invention can have quite efficient purification function to apparent particle pollution condition of the atmosphere. If a region with air being seriously polluted, for example, Beijing-Tianjin-Hebei region, Yangtze River Delta, Pearl River Delta and other regions in China, uses this technology for complete upgrading and application, there will be fresh air, blue sky and white cloud in all the four seasons. The problem of apparent particle pollution of the atmosphere caused by the external combustion engines and the internal combustion engines can be solved once for all if keeping operation of the devices after upgrading. Moreover, since such upgrading can enable the device to save a lot of energy, timely return the investment, save a lot of energy sources, and reduce the device expenditure, it will be popular with relevant enterprises and device users, and they will actively use the present technology to perform technical upgrading on combustion device products for absolute zero pollution and on automobile, ships and so on for relative zero pollution. Since this technology is easy to develop and implement, based on existing national power and the power of the people, if we all do our best, it is expected to complete the upgrading of overall air pollution control technology in the Beijing-Tianjin-Hebei region in 7 to 8 years, substantially achieving blue sky and white cloud and further contributing to bidding and hosting of the 2020 Winter Olympics;
8. the technical method of the present invention can gradually solve the intrinsic pollution problem of carbon dioxide gases produced by both atmospheric combustion sources and various other pollution gas production sources. The capacities of the existing air-purification technologies are far from stopping the trend of slow increasing of the carbon dioxide component in the atmosphere. However, after the present technology is in full implementation, the trend of slow increasing can be slowed down and gradually stopped. Firstly, if every family uses an air purifier manufactured through the present technology, one important source of releasing carbon dioxide to the outdoor atmosphere when windows of each house are open in the morning is cut off; if all external combustion engines and internal combustion engines are reformed with the present technology, most of the sources producing the industrial carbon dioxide gas are eliminated; moreover, with the unceasing work of the auto-purification system of nature, the total content of the carbon dioxide in the atmosphere on the earth surface will stop growing slowly, and will decrease after long-term use, so that the content of the carbon dioxide in the atmosphere on earth will be out of the current dangerous state, and be gradually restored to a normal state.
   According to an authoritative test in America, the total content of the carbon dioxide in the atmosphere on the earth surface has been already over 400 ppm, which is serious and results in that extreme weather frequently occurs around the world, doing harm to the living of human beings and animals. The general thought of the present technology for solving the problem comprises fully upgrading the existing external combustion engines and internal combustion engines using the present device, to firstly realize that these basic combustion devices will no longer discharge carbon dioxide to the atmosphere; placing a lot of pollution purification devices in the atmosphere to gradually slowly eliminate the carbon dioxide having been already discharged into the atmosphere; and using indoor air-purification devices to eliminate the carbon dioxide produced in the indoor air due to people's breathing, so that the carbon dioxide will not be released to the atmosphere when windows of each house are open. The overall trend of reducing the content of carbon dioxide in the global atmosphere will be formed under the joint effort of all human beings.
   It is believed that the national environment department and the environment department of the United Nations will give attention to the method of the present technology, take the lead in establishing a global atmosphere environment protection engineering system. Although this requires tens of years or longer, a framework technical solution for solving the problem of serious carbon dioxide pollution of the global atmosphere is finally built. It is started with three items of basic work, namely, making the external combustion engines discharge no carbon dioxide, making the internal combustion engines discharge little carbon dioxide, and using the present device indoors and outdoors to eliminate and decompose the carbon dioxide. If all human beings do the best, the object of making the concentration of carbon dioxide in the atmosphere return to normal can be realized in a not too long period of time.
9. As a material resource on the earth, there exists a lot of feldspar used in the technology of the present invention, and generally speaking, it is inexhaustible, and among the preparation materials of carbon dioxide reducing agents, it has the highest efficiency, the lowest cost, and the simplest manufacturing process. The present technology also can use, through its own existing mechanical technical structure. various liquid carbon dioxide reducing agents and various other targeted liquid reducing agents, deodorizing agents and flavoring agents invented in the future, to solve different problems produced in different situations, thus it is a technology with a very wide application scope;
10. the technology of the present invention can be quickly developed since it is simple and reliable and can be quickly popularized because it has a low cost and high efficiency;
11. a lot of scrapped vehicles can be reformed, as power sources and carriers, into outdoor atmosphere purifiers, turning waste into wealth;
12. the present technology is one of the technologies capable of saving much energy at present (rather than in the future). In the existing technologies of using water to save oil, the highest oil-saving rate of the emulsification technology of blending water in the fuel oil is 60%, but it cannot be commercialized. However, the present technology can be commercialized. Although the oil-saving rate is relatively low compared with the technology of emulsifying oil by adding water which can save 60% of the oil, the present technology can be commercialized and provide benefits, which is the key, and its practical oil-saving effect tops various current energy-saving technologies;
13. using the present pollution gas pollution cleaning device can make the chimneys of the external combustion engines using coal, oil and gas for combustion in factories no longer discharge waste gases, realizing absolute zero pollution to the atmosphere; and can make the devices using an internal combustion engine such as automobiles, ships, naval vessels and so on discharge few relatively clean waste gases outwards, realizing relative zero pollution to the atmosphere;
14. the small-size indoor air-purification device manufactured using the principle of the present technology can quickly be used in houses for being directly beneficial to people's body health, so as to gain significant economic benefits;
15. this device can suck the pollution gases into its working cavity for pollution cleaning and purifying processing, wherein various particles and oxides of sulfur, phosphor, iron, copper, lead and so on contained in the pollution gases are humidified by the pollution cleaning liquid to expand, gain weight, deposit, aggregate to be intercepted; the carbon dioxide contained in the pollution gases, after neutralizing processing of the aqueous feldspar solution, become solid-state carbonate substances, which are immediately humidified to gain weight, deposit, aggregate to be intercepted; when the two solid-state pollution substances remaining at the bottom of the working cavity of the pollution gas pollution cleaning device are accumulated sufficiently, a porridge-like pollutant mixture is formed, which is regularly discharged for use as other industrial materials; and the pollution gases, after undergoing such pollution cleaning processing and then being discharged, has a very high cleaning degree, and substantially contains no carbon dioxide. If the waste gases produced by combustion of the external combustion engine are processed, the processed clean gases also contain heat energy and water, which may be directly subjected to recycling of waste energy sources through the following method: the waste gases produced by the external combustion engine are directly guided into the device for pollution cleaning processing, and after they are processed into clean air containing heat energy and water, they are then directly guided into the gas inlet passage of the external combustion engine to again take part in the combustion, forming a closed cycle in which air takes part in the combustion, and achieving the effect of absolute zero pollution to the atmosphere, and the heat energy contained in the clean air is recycled, and the contained water can release heat energy when again taking part in the combustion, which can save about 15-20% of the fuel; after the waste gases produced by the internal combustion engine are changed into clean air, most of them are directly guided into the gas inlet pipe of the internal combustion engine to again take part in the combustion, forming a closed cycle in which most of the air takes part in the combustion, achieving the effect of relative zero pollution to the atmosphere, and the heat energy contained in such clean air can be recycled, and the contained water again take part in the combustion so as to be recovered and recycled, moreover, the pressure kinetic energy contained in the waste gases discharged by the internal combustion engine can be recovered and reutilized, so as to save 30-50% of the fuel oil;
16. when the air-purification device is placed indoors for operation, it serves the function of sucking indoor fine particles (PM 2.5), micro-particles (PM 0.5), and carbon dioxide (CO₂), and discharging clean air containing precious few fine particles (PM 2.5) and micro-particles (PM 0.5), which is beneficial to body health of people and animals fed indoors, and has a function of protecting the health;
   when the air-purification device is manufactured to be of a large-flow type and used in colony in cities and other areas where the air pollution degree is relatively high or the haze degree is relatively high, it serves the function of sucking floating dusts, inhalable particles (PM 10), fine particles (PM 2.5), micro-particles (PM 0.5), carbon dioxide (CO₂) and so on in the air, and discharging clean air, which can directly reduce the atmospheric pollution degree and haze concentration so as to reduce the damage degree to human bodies, and serve the function of preventing disasters and reducing the disasters, meanwhile, it has the function of gradually reducing the concentration of the carbon dioxide in the atmosphere; and
   when the air-purification device is manufactured to be of a small-flow type and equipped with an air mask and so on, it becomes a small-size portable pollution air purifier, and can be used by people working or walking in environment where the air is seriously polluted to protect people's body health against damage by the pollution air.

### (IV) Brief Description of Drawings

Fig. 1 is a structural block diagram of an air-purification device using a liquid reducing agent according to the present invention;
Fig. 2 is a structural schematic diagram of the air-purification device using a liquid reducing agent according to the present invention;
Fig. 3 is an illustrative schematic diagram showing an improved basic system structure of the air-purification device using a liquid reducing agent according to the present invention;
Fig. 4 is a structural schematic diagram of the air-purification device using a liquid reducing agent according to the present invention, when applied to an indoor and outdoor air purifier product;
Fig. 5 is a schematic diagram showing use of the air-purification device using a liquid reducing agent according to the present invention, as a mobile group for pollution cleaning of a sudden severe pollution source production region;
Fig. 6 is a schematic diagram showing a structure of the air-purification device using a liquid reducing agent according to the present invention as a small portable air purifier, as well as a using method thereof;
Fig. 7 is a schematic diagram showing a product basic structure of the air-purification device using a liquid reducing agent according to the present invention, which makes an external combustion engine achieve absolute zero pollution and save energy;
Fig. 8 is a schematic diagram showing a product structure of the air-purification device using a liquid reducing agent according to the present invention, which makes an oversized external combustion engine achieve absolute zero pollution and save energy;
Fig. 9 is a schematic diagram showing a product basic structure of the air-purification device using a liquid reducing agent according to the present invention, which makes a gasoline engine achieve relative zero pollution and save energy; and
Fig. 10 is a schematic diagram showing a product basic structure of the air-purification device using a liquid reducing agent according to the present invention, which makes a diesel engine achieve relative zero pollution and save energy;
in the figures, 1- pollution gas purifying cavity, 2- purification-device stored-liquid temperature-regulation tank, 3- pollution gas intake, 4- pollution gas pressurizer, 5- pollution gas multipath blow-pipe set, 6- full-plate-porous pollution-particle transverse isolation plate, 7- semi-plate-porous pollution-particle vertical isolation plate, 8- porous pollution-particle secondary isolation plate, 9- pollution-particle blocking, sticking and sliding-down barrel, 10- clean-air turning inward-rotating exit, 11- clean gas exhaust opening, 12- pollution cleaning liquid quantity display tube, 13- pollution cleaning liquid quantity limit mark, 14- pollution cleaning liquid adding opening, 15- alternating current wiring board, 16- electric pollution cleaning liquid temperature regulator, 17- sludge accumulating chamber, 18- pollution cleaning helical shovel, 19- helical shovel motor, 20- sludge discharge transition chamber, 21- sludge discharge switch, 22- on-off electric switch, 23- pollution cleaning operation display lamp, 24-pollution cleaning stop display lamp, 25- sludge discharge switch handle, 26-toggle motor switch, 27- pollution degree indicator; 28- purification level indicator; 29- external combustion engine, 30- chimney, 31- gas inlet passage, 32- gasoline engine, 33- gas inlet pipe, 34- gas exhaust pipe, 35- three-way dual-purpose gas exhaust pipe, 36- exhausted-gas diverting pressurizing change-over valve, 37- exhausted-gas diverting pressurizing actuator, 38-transition gas exhaust outlet, 39- exhausted gas-pressurizing gas inlet, 40-exhausted gas-depressurizing gas relief outlet, 41- inlet gas pressurizing control valve, 42- anti-explosion coordinating gas relief valve, 43- pedal, 44- gas inlet regulating valve, 45- gas inlet regulating valve transfer bar, 46- bridge coordinating gas-guide tube, 47- inlet gas pressurizing control valve transfer bar, 48- energy recycling switch, 49- recycling-operation-performing display lamp, 50- recycling-operation-stop display lamp, 51- microcomputer, 52- dirt concentration sensor, 53- signal inductive switch actuator, 54- sludge receiving box, 55- battery, 56- switch for regularly discharging water in lubricant, 57-motor vehicle, 58- pollution gas, 59- common opening for allowing gas to flow in and out and for adding pollution cleaning liquid, 60- porous common opening cover, 61- strap, 62- breathing mask, 63-breathing mask flexible tightening belt, 64-one-way gas inhalation valve, 65- one-way gas exhalation valve, 66-breathing dividing conjoined hose, 67- gas inlet, 68- inlet gas pre-heater, 69-diesel engine, 70- fuel injection quantity regulating valve, 71- fuel injection nozzle, 72- high-pressure diesel pump.

### (V) Detailed Description of Embodiments:

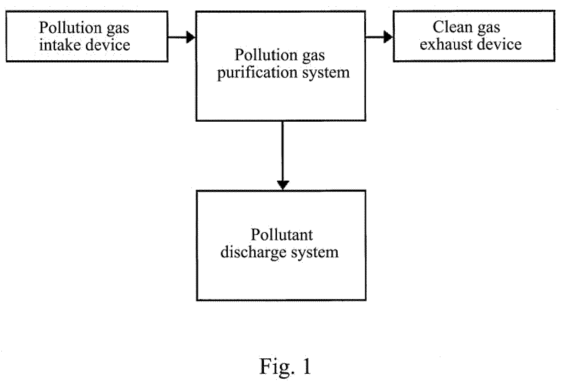

Example: an air-purification device using a liquid reducing agent (see Fig. 1 to Fig. 10) is characterized by comprising a pollution gas intake 3, a pollution gas purifying cavity 1 and a clean gas exhaust opening 11; wherein the pollution gas purifying cavity 1 is divided into a plurality of cavity bodies by at least one semi-plate-porous pollution-particle vertical isolation plates 7; a pollution cleaning liquid is contained in the pollution gas purifying cavity 1; the semi-plate-porous pollution-particle vertical isolation plate 7 has one half configured for sealing, and the other half configured for making two adjacent cavity bodies in communication through pores; the pollution gas intake 3 and the clean gas exhaust opening 11 are respectively located on first one and last one of the cavity bodies.

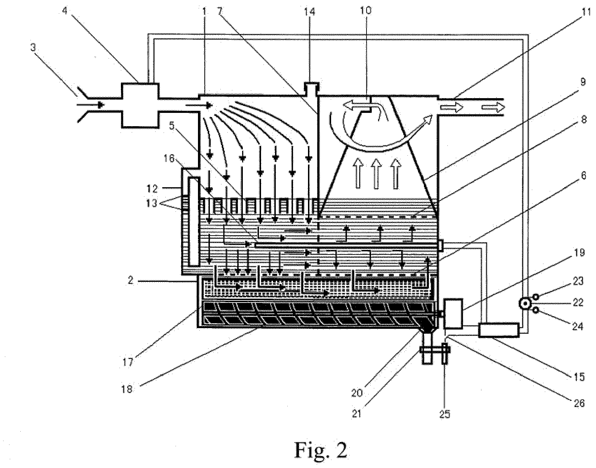

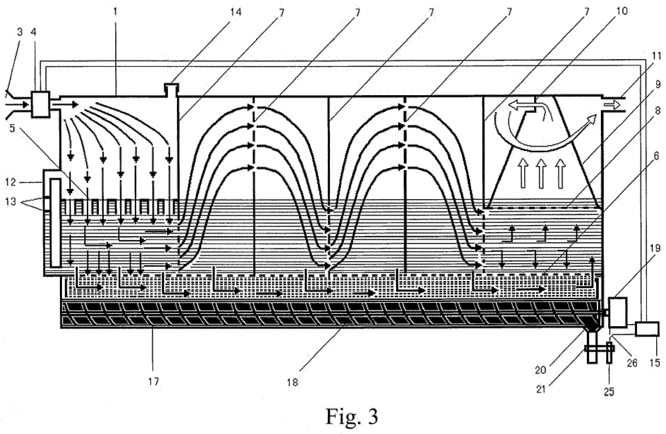

When there is one semi-plate-porous pollution-particle vertical isolation plate 7, the pollution gas purifying cavity 1 is divided into two cavity bodies; and a part of the semi-plate-porous pollution-particle vertical isolation plate 7 located above the pollution cleaning liquid is configured for sealing, and a part of the semi-plate-porous pollution-particle vertical isolation plate located below the pollution cleaning liquid makes the two cavity bodies in communication through a plurality of pores; (see Fig. 2, Fig. 4, Fig. 6, Fig. 7, Fig. 9, and Fig. 10)
when there are five semi-plate-porous pollution-particle vertical isolation plates 7, parts of a first and a last semi-plate-porous pollution-particle vertical isolation plates 7 located above the pollution cleaning liquid are configured for sealing, and parts of the first and the last semi-plate-porous pollution-particle vertical isolation plates located below the pollution cleaning liquid make two cavity bodies in communication through a plurality of pores, and between the first and the last semi-plate-porous pollution-particle vertical isolation plates, the semi-plate-porous pollution-particle vertical isolation plates 7 in a form of communicating in an upper part and sealing in a lower part and the semi-plate-porous pollution-particle vertical isolation plates in a form of communicating in a lower part and sealing in an upper part are alternately disposed and spaced from each other (see Fig. 3).

A pollution cleaning liquid quantity display tube 12 is mounted on a side wall of the pollution gas purifying cavity 1; pollution cleaning liquid quantity limit marks 13 are provided on the pollution cleaning liquid quantity display tube 12; and an electric pollution cleaning liquid temperature regulator 16 is mounted in a part of the pollution gas purifying cavity 1 in which the pollution cleaning liquid is contained; (see Fig. 2, Fig. 3, Fig. 4, Fig. 7, Fig. 9, and Fig. 10)
a bottom of the pollution gas purifying cavity 1 is connected with a sludge accumulating chamber 17 through a full-plate-porous pollution-particle transverse isolation plate 6; pollution cleaning helical shovels 18 are mounted at a bottom inside the sludge accumulating chamber 17; the pollution cleaning helical shovels 18 are connected with a helical shovel motor 19; a sludge discharge transition chamber 20 is connected with the bottom of the sludge accumulating chamber 17; a sludge discharge switch 21 is provided at a discharge opening of the sludge discharge transition chamber 20; the sludge discharge switch 21 is connected with a sludge discharge switch handle 25; and one end of the sludge discharge switch handle 25 is corresponding to a toggle motor switch 26; (see Fig. 2, Fig. 3, Fig. 4, Fig. 7, Fig. 9, and Fig. 10)
the pollution gas purifying cavity 1 and the sludge accumulating chamber 17 are both placed inside a purification-device stored-liquid temperature-regulation tank 2. (see Fig. 2, Fig. 4, Fig. 7, Fig. 9, and Fig. 10)

A pollution cleaning liquid adding opening 14 is provided at a top of the pollution gas purifying cavity 1. (see Fig. 2, Fig. 3, Fig. 4, Fig. 7, Fig. 9, and Fig. 10)

The electric pollution cleaning liquid temperature regulator 16 and the helical shovel motor 19 are both connected with an alternating current wiring board 15; and the alternating current wiring board 15 is connected with an on-off electric switch 22, a pollution cleaning operation display lamp 23, a pollution cleaning stop display lamp 24 and a toggle motor switch 26. (see Fig. 2, Fig. 3, Fig. 4, and Fig. 7)

The cavity body connected with the pollution gas intake 3 is a pollution gas suction cavity; a pollution gas multipath blow-pipe set 5 is mounted in an upper portion of the pollution cleaning liquid in the pollution gas suction cavity; (see Fig. 2, Fig. 3, Fig. 4, Fig. 7, Fig. 9, and Fig. 10)
the cavity body connected with the clean gas exhaust opening 11 is a clean gas exhaust cavity; a porous pollution-particle secondary isolation plate 8 is mounted in an upper portion of the pollution cleaning liquid in the clean gas exhaust cavity; a pollution-particle blocking, sticking and sliding-down barrel 9 is provided above the porous pollution-particle secondary isolation plate 8; and a clean-air turning inward-rotating exit 10 is provided at a top of the pollution-particle blocking, sticking and sliding-down barrel 9. (see Fig. 2, Fig. 3, Fig. 4, Fig. 7, Fig. 9, and Fig. 10)

A pollution gas pressurizer 4 is mounted at the pollution gas intake 3. (see Fig. 2, Fig. 3, Fig. 4, and Fig. 7)

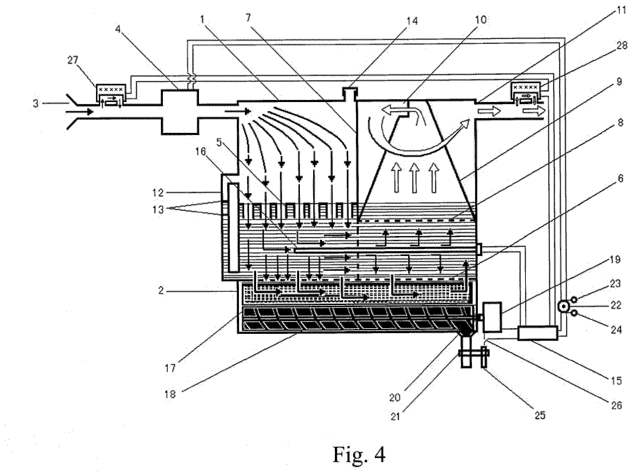

A pollution degree indicator 27 is mounted at the pollution gas intake 3; a purification level indicator 28 is mounted at the clean gas exhaust opening 11; and the pollution degree indicator 27 and the purification level indicator 28 are both connected with the alternating current wiring board 15. (see Fig. 4)

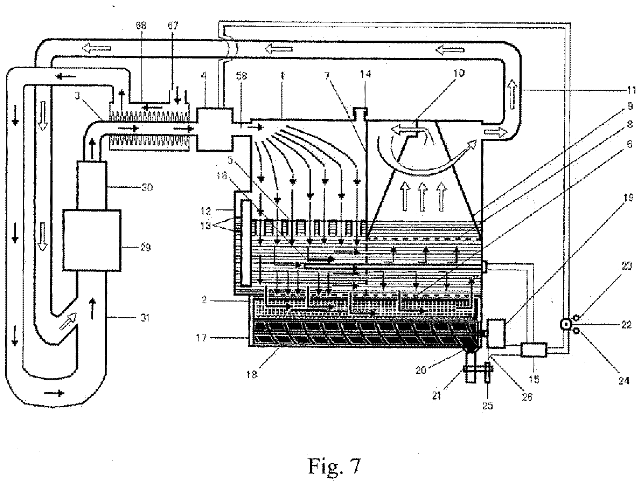

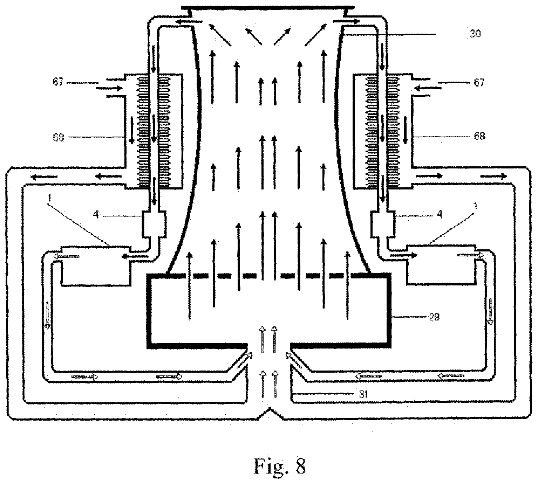

The pollution gas intake 3 is connected with a chimney 30 of an external combustion engine 29; and the clean gas exhaust opening 11 is connected with a gas inlet passage 31 of the external combustion engine 29;
the gas inlet passage 31 of the external combustion engine 29 is connected with an inlet gas pre-heater 68; a gas inlet 67 is provided on the inlet gas pre-heater 68. (see Fig. 7 and Fig. 8)

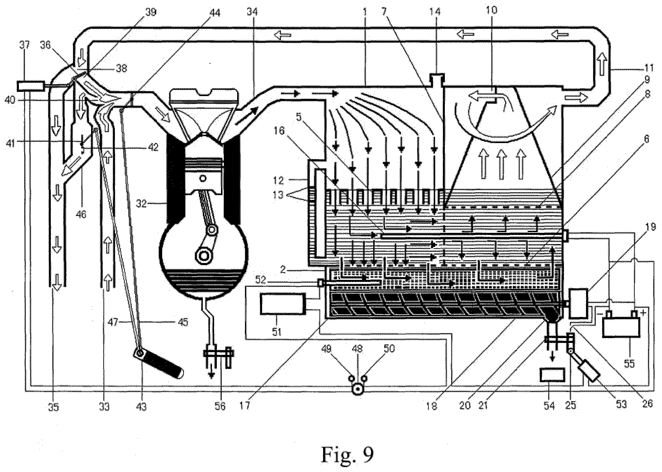

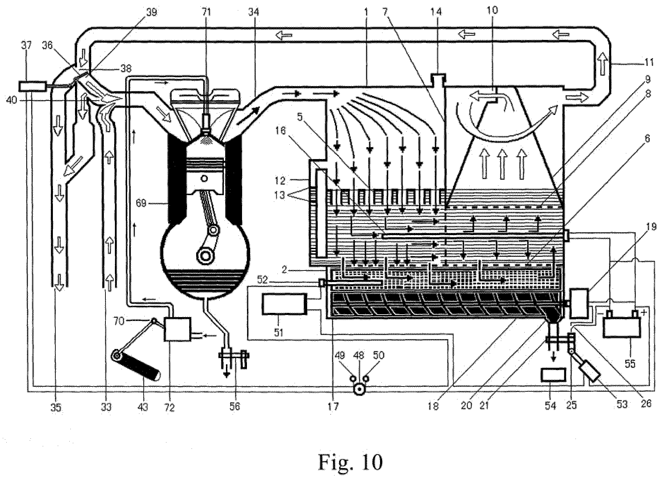

The pollution gas intake 3 is connected with a gas exhaust pipe 34 of an internal combustion engine; the clean gas exhaust opening 11 is connected with a three-way dual-purpose gas exhaust pipe 35; an input end of a transition gas exhaust outlet 38 of the three-way dual-purpose gas exhaust pipe 35 is connected with an output end of the clean gas exhaust opening 11, an output end of the transition gas exhaust outlet 38 is connected with an outlet of the three-way dual-purpose gas exhaust pipe 35 and an input end of an exhausted gas-pressurizing gas inlet 39 respectively, an output end of the exhausted gas-pressurizing gas inlet 39 is connected with a gas inlet pipe 33 of the internal combustion engine and an input end of an exhausted gas-depressurizing gas relief outlet 40 respectively; an output end of the exhausted gas-depressurizing gas relief outlet 40 is connected with an input end of a bridge coordinating gas-guide tube 46; and an output end of the bridge coordinating gas-guide tube 46 is connected with the three-way dual-purpose gas exhaust pipe 35; (see Fig. 9 and Fig. 10)
an exhausted-gas diverting pressurizing change-over valve 36 is mounted between an output end of the transition gas exhaust outlet 38 and an input end of the exhausted gas-pressurizing gas inlet 39; the exhausted-gas diverting pressurizing change-over valve 36 is connected with an exhausted-gas diverting pressurizing actuator 37; the sludge discharge switch handle 25 is connected with a signal inductive switch actuator 53; (see Fig. 9 and Fig. 10) a dirt concentration sensor 52 is provided in the sludge accumulating chamber 17; the discharging opening of the sludge discharge transition chamber 20 is corresponding to a sludge receiving box 54; (see Fig. 9 and Fig. 10)
all of the exhausted-gas diverting pressurizing actuator 37, the dirt concentration sensor 52, and the signal inductive switch actuator 53 are connected with a microcomputer 51; (see Fig. 9 and Fig. 10)
all of the electric pollution cleaning liquid temperature regulator 16, the helical shovel motor 19, the exhausted-gas diverting pressurizing actuator 37, the dirt concentration sensor 52, the signal inductive switch actuator 53 and the microcomputer 51 are connected with a battery 55; the battery 55 is connected with an energy recycling switch 48, a recycling-operation-performing display lamp 49, a recycling-operation-stop display lamp 50 and a toggle motor switch 26. (see Fig. 9 and Fig. 10)

A switch for regularly discharging water in lubricant 56 is provided at a bottom of the internal combustion engine. (see Fig. 9 and Fig. 10)

The internal combustion engine is embodied as a gasoline engine 32; a gas inlet regulating valve 44 is mounted at a gas inlet of the gasoline engine 32; an inlet gas pressurizing control valve 41 and an anti-explosion coordinating gas relief valve 42 are mounted in the bridge coordinating gas-guide tube 46; the gas inlet regulating valve 44 is connected with a pedal 43 through a gas inlet regulating valve transfer bar 45, and the inlet gas pressurizing control valve 41 is connected with the pedal 43 through an inlet gas pressurizing control valve transfer bar 47; (see Fig. 9)
the internal combustion engine is embodied as a diesel engine 69; a fuel injection nozzle 71 of the diesel engine 69 is connected with a high-pressure diesel pump 72, and the high-pressure diesel pump 72 is connected with a fuel injection quantity regulating valve 70; the fuel injection quantity regulating valve 70 is connected with the pedal 43. (see Fig. 10)

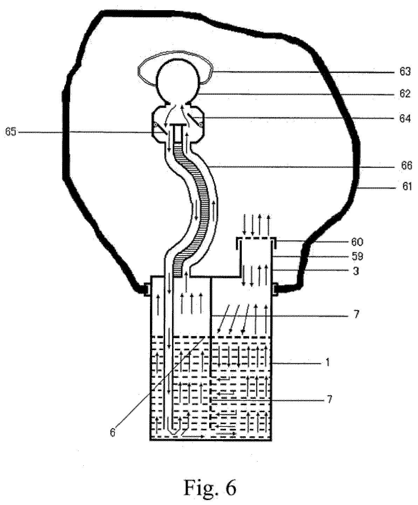

The clean gas exhaust opening 11 of the pollution gas purifying cavity 1 is connected with a breathing dividing conjoined hose 66; the breathing dividing conjoined hose 66 is constituted of a gas inlet pipe and a gas outlet pipe, a one-way gas inhalation valve 64 is mounted at an output end of the gas inlet pipe, a one-way gas exhalation valve 65 is mounted at an input end of the gas outlet pipe, and the output end of the gas inlet pipe and the input end of the gas outlet pipe are both connected with a breathing mask 62; an input end of the gas inlet pipe is connected with the clean gas exhaust opening 11, and an output end of the gas outlet pipe extends into the pollution cleaning liquid; a common opening for allowing gas to flow in and out and for adding pollution cleaning liquid 59 is provided at the pollution gas intake 3 of the pollution gas purifying cavity 1; a porous common opening cover 60 is mounted on the common opening 59 for allowing gas to flow in and out and for adding pollution cleaning liquid. (see Fig. 6)

A strap 61 is provided on an outer wall of the pollution gas purifying cavity 1; and the breathing mask 62 is provided with a breathing mask flexible tightening belt 63. (see Fig. 6)

The pollution cleaning liquid is embodied as an aqueous feldspar solution.

When there are more than two air-purification devices using a liquid reducing agent, the clean gas exhaust opening 11 of a former one of two adjacent air-purification devices is connected with the pollution gas intake 3 of a latter one.

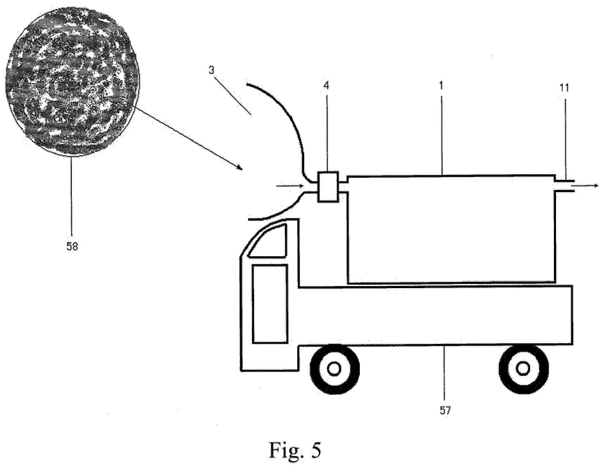

The air-purification device using a liquid reducing agent is placed on a motor vehicle 57, and the motor vehicle 57 is moved to a downwind place where various extra-concentrated pollution gases 58 are temporarily produced. (see Fig. 5)

An operation and application method for the above air-purification device using a liquid reducing agent is characterized by comprising steps as follows:
(1) adding a pollution cleaning liquid into a pollution gas purifying cavity 1;
(2) making pollution gases enter the pollution gas purifying cavity 1 through a pollution gas intake 3;
(3) the gases, from one cavity body of the pollution gas purifying cavity 1, entering into another cavity body of the pollution gas purifying cavity 1, through the pollution cleaning liquid and a semi-plate-porous pollution-particle vertical isolation plate 7; and
(4) exhausting the pollution gases after purified by the pollution cleaning liquid from a clean gas exhaust opening 11.

The pollution cleaning liquid is added by opening a cover on a pollution cleaning liquid adding opening 14 on the pollution gas purifying cavity 1 and adding an appropriate amount of the pollution cleaning liquid, wherein the appropriate amount refers to an amount between an upper limit and a lower limit of a pollution cleaning liquid quantity limit marks 13 marked on a pollution cleaning liquid quantity display tube 12. A power supply is turned on, the pollution gas intake 3 is placed in pollution gases, then an on-off electric switch 22 is pressed down, a pollution cleaning operation display lamp 23 is turned on, at this time a pollution gas pressurizer 4 is powered on and starts rotating operation, the pollution gases will enter the pollution gas pressurizer 4 through the pollution gas intake 3 for pressurization, and the pressurized pollution gases will enter the pollution gas purifying cavity 1 placed in a purification-device stored-liquid temperature-regulation tank 2, and then injected into the pollution cleaning liquid by multiple paths of blow pipes of a pollution gas multipath blow-pipe set 5, at this time, the pollution gases and the pollution cleaning liquid are in a mixed fused state, thus, dusts, PM 10 inhalable particles, PM 2.5 fine particles, and PM 0.5 micro-particles carried in the pollution gases are humidified to expand, so as to gain weight, sink down, be aggregated, be granulated, and be agglomerated, and then sink down to a sludge accumulating chamber 17 through a plurality of pores on a full-plate-porous pollution-particle transverse isolation plate 6, and dirt particles which do not sink down timely may be again blocked when passing through the semi-plate-porous pollution-particle vertical isolation plate 7, so as to collide, be granulated, gain weight and sink down, and sink down to the sludge accumulating chamber 17 through pores on the full-plate-porous pollution-particle transverse isolation plate 6; carbon dioxide contained in the pollution gases, during the process of mixing with the pollution cleaning liquid, will carry out neutralization and reduction reactions to form various solid-state carbonate substances, which are then humidified to expand, so as to gain weight, be aggregated, sink down, be granulated, and be agglomerated, and then sink down to the sludge accumulating chamber 17 through a plurality of pores on the full-plate-porous pollution-particle transverse isolation plate 6. The pollution gases, after the above processing procedures, still may not be very clean, and still carry dirt particles, the semi-clean air carrying few fine dirt particles continues to flowing in the pollution cleaning liquid toward a downstream position close to an outlet, and when passing through a porous pollution-particle secondary isolation plate 8 to enter upwards a pollution-particle blocking, sticking and sliding-down barrel 9, some dirt particles are partially blocked again by the porous pollution-particle secondary isolation plate 8 and sink into the sludge accumulating chamber 17. Afterwards, although the pollution gases are already quite clean, but still contain few fine dirt particles. When these fine particles move upwards together with the gases along the pollution-particle blocking, sticking and sliding-down barrel 9, since the pollution-particle blocking, sticking and sliding-down barrel 9 is a dome-shaped cylindrical body having a larger upper opening and a smaller lower opening, fine dirt particles are blocked and stuck on an inner wall of the dome-shaped cylindrical body, gradually are increased in size, weight and amount and thereby slide down, sink down into the pollution cleaning liquid through a plurality of pores on the porous pollution-particle secondary isolation plate 8, and continue sinking down into the sludge accumulating chamber 17 through a plurality of pores on the full-plate-porous pollution-particle transverse isolation plate 6, and clean waste gases containing precious few fine dirt particles, when rising to a top end of the pollution-particle blocking, sticking and sliding-down barrel 9, are turned back and blocked at a clean-air turning inward-rotating exit 10 to rotate transversely to go out, at this time, finer dirt particles are thrown to collide and stick on an inner wall of a relevant cavity body, so as to become bigger, gain weight, and slide down into corners where the purification-device stored-liquid temperature-regulation tank 2 and the pollution-particle blocking, sticking and sliding-down barrel join, to be accumulated; solid-state carbonate particles together with floating dusts, PM 10 inhalable particles, PM 2.5 fine particles, and PM 0.5 micro-particles are humidified, deposited and accumulated, and become a porridge-like mixture when gradually accumulated enough, the mixture is intercepted and stored in the sludge accumulating chamber 17, and removed through the pollution cleaning helical shovels 18. Clean air obtained from the pollution gases is exhausted from the clean gas exhaust opening 11 under a pressure generated by the pollution gas pressurizer 4.

The waste gases exhausted from the external combustion engine 29 and pressurized by the pollution gas pressurizer 4 are sucked in through the pollution gas intake 3. The waste gases pass through an inlet gas pre-heater 68 during a path of being sucked in, to transfer most of heat in the waste gases to air entering from gas inlets 67, the air obtaining the heat enters a gas inlet passage 31 through pipes, and then enters the external combustion engine to take part in the combustion; after purified in the pollution gas purifying cavity 1 to become clean air, the waste gases are exhausted through the clean gas exhaust opening 11 to enter the gas inlet passage 31 of the external combustion engine 29, and be mixed with newly entered fresh heated air and then take part in the combustion again.

The waste gases, exhausted through an exhaust pipe 34 after the internal combustion engine is started, are sucked in through the pollution gas intake 3. The waste gases, after purified in the pollution gas purifying cavity 1 to become clean air, are exhausted through the clean gas exhaust opening 11 and guided into the transition gas exhaust outlet 38, and enter a three-way dual-purpose gas exhaust pipe 35 to be exhausted out of the engine; after the internal combustion engine is started, preheated, and stabilized, an energy recycling switch 48 is pressed down, at this time a recycling-operation-performing display lamp 49 is turned on, an exhausted-gas diverting pressurizing actuator 37 works after being turned on, an exhausted-gas diverting pressurizing change-over valve 36 is manipulated to open the exhausted gas-pressurizing gas inlet 39, meanwhile the transition gas exhaust outlet 38 on the three-way dual-purpose gas exhaust pipe 35 is closed, at this time the clean waste gases exhausted from the clean gas exhaust opening 11 are diverted to enter the gas inlet pipe 33 from the exhausted gas-pressurizing gas inlet 39, the clean air, as a pressurized air jet flow, is used for directly pressurization in a gas inlet stroke of the internal combustion engine, and fresh air coming from the gas inlet pipe 33, as being driven by the jet flow gases, also flows together to enter a cylinder of the internal combustion engine.

When the gasoline engine 32 is in use and the pedal 43 is stepped down, a gas inlet regulating valve 44 is driven by a gas inlet regulating valve transfer bar 45, so that the gas inlet regulating valve rotates from a minimum opening degree position towards a direction of a maximum opening degree position, so as to increase the gas inlet quantity and the fuel injection quantity, meanwhile, the inlet gas pressurizing control valve transfer bar 47 connected with the pedal 43 concurrently drives an inlet gas pressurizing control valve 41 to rotate from a full-open position to a full-close position, and once the gas inlet regulating valve 44 reaches the full-open position, the inlet gas pressurizing control valve 41 reaches the full-close position;
during a process of operating the pedal 43 for adjusting and controlling an operation state of the gasoline engine 32:
during speeding up at a low speed or a medium speed, with the speeding-up gentle, the waster gases, after being processed to become clean, completely re-enter the cylinder through the gas inlet pipe 33 and the gas inlet regulating valve 44, therefore, all the exhausted clean waste gases will be completely recycled;
in the case of medium and high speeds, as a total quantity of processed and cleaned waste gases is increased and a total quantity of newly entered fresh air is increased, when they are not completely enter the cylinder within a very short gas inlet stroke period due to the exceeded sum of mixed air of the waste gases and fresh air, the clean waste gases waiting to enter the cylinder are excessively accumulated in the gas inlet pipe 33, then the waste gases are squeezed into a bridge coordinating gas-guide tube 46 from the exhausted gas-depressurizing gas relief outlet 40 to enter the three-way dual-purpose gas exhaust pipe 35 so as to be exhausted out of the engine, thus, although a little of clean waste gases may not be recycled and thus wasted, the advantage is obtained that operation and working condition are well when using the energy of the waste gases;
when the pedal 43 is floored, the gas inlet regulating valve 44 reaches the full-open position, so that the total inlet gas quantity reaches the highest, while the inlet gas pressurizing control valve 41 at this time reaches the full-close position, so that the pressure of the recycled clean waste gases reaches the highest, the total inlet gas quantity obtained in the cylinder is very high due to that rushing of the waste gases forms an inlet gas pressure, so that the power supplied by the gasoline engine 32 is the highest;
when all the clean waste gases completely enter the cylinder at the highest pressure, deflagration phenomenon may occur, therefore, when a critical point at which the deflagration phenomenon may be induced is reached, an anti-explosion coordinating gas relief valve 42 equipped on the inlet gas pressurizing control valve 41 is used to release some high-pressure clean waste gases to reduce the total inlet gas quantity, which can prevent occurrence of the deflagration phenomenon of the engine, and these released clean waste gases are transferred to the three-way dual-purpose gas exhaust pipe 35 through the bridge coordinating gas-guide tube 46 to be exhausted out of the engine,
when the pedal 43 is released suddenly or at a high speed from being floored and a gas inlet resistance becomes bigger or rapidly becomes larger as the gas inlet regulating valve 44 is turned down or rapidly turned down, the inlet gas pressure at the gas inlet regulating valve 44 will instantly quickly become larger, these clean waste gases with a larger pressure are squeezed into the bridge coordinating gas-guide tube 46 from the exhausted gas-depressurizing gas relief outlet 40, at this time the inlet gas pressurizing control valve 41 has been already in a state from a semi-open position to a full-open position due to the releasing of the pedal 43, and these clean waste gases will be transferred to the three-way dual-purpose gas exhaust pipe 35 from the bridge coordinating gas-guide tube 46 to be exhausted out of the engine;
in 5-6 minutes before the operation of the gasoline engine 32 ends, the energy recycling switch 48 is turned off, and the recycling-operation-stop display lamp 50 is turned on, at this time, an exhausted-gas diverting pressurizing actuator 37 acts to make the exhausted-gas diverting pressurizing change-over valve 36 open a transition gas exhaust outlet 38, and meanwhile close the exhausted gas-pressurizing gas inlet 39, so that the clean waste gases are not able to enter the gas inlet pipe 33 and to thereby enter the cylinder, but directly enter the three-way dual-purpose gas exhaust pipe 35 to be exhausted out of the engine.

Since the recycled clean air contains water of higher proportion compared with air, the water is mixed into a lubricant when running into an engine housing through an interface clearance of a piston ring, sinks down to a bottom of an oil pan when the engine is stopped to rest, and is accumulated increasingly, and when accumulated too much, a lubricant pump pumps the lubricant and water together into a lubricant path, therefore, the water accumulated at the bottom is discharged by a switch for regularly discharging water in lubricant 56; the switch for regularly discharging water in lubricant 56 communicates with a hollow oil discharge screw plug through a transparent rubber tube, and the switch for regularly discharging water in lubricant 56 is duly switched on to discharge the water.

When the clean gas exhaust opening 11 of the pollution gas purifying cavity 1 is connected with a breathing dividing conjoined hose 66, firstly the pollution cleaning liquid, *i.e.* the aqueous feldspar solution, is added through a common opening for allowing gas to flow in and out and for adding pollution cleaning liquid 59 provided at the pollution gas intake 3, until a liquid level reaches a position below and close to the full-plate-porous pollution-particle transverse isolation plate 6; then a user carries the portable simple air-purification device on his/her back through the strap 61, and then wears the breathing mask 62; when be inhaled, polluted air enters the cavity body at one side of the semi-plate-porous pollution-particle vertical isolation plate 7 in the pollution gas purifying cavity 1 from the common opening for allowing gas to flow in and out and for adding pollution cleaning liquid 59, and is able to enter the aqueous feldspar solution only by firstly passing through a plurality of pores on the full-plate-porous pollution-particle transverse isolation plate 6 due to that the upper portion of the semi-plate-porous pollution-particle vertical isolation plate 7 has no pores, at this time, dusts, and PM 10, PM 2.5, and PM 0.5 particles in the pollution air are humidified to expand, so as to gain weight, sink down, be granulated, be agglomerated, and sink down to a bottom of the pollution gas purifying cavity 1, a trace amount of carbon dioxide contained in the air, when passing through the pollution cleaning liquid, undergoes neutralization and reduction reactions with the aqueous feldspar solution as the the pollution cleaning agent, to generate solid-state carbonate substances, which sink down to the bottom of the pollution gas purifying cavity 1 after being humidified, and the pollution-cleaned air rises to the cavity body at the other side of the semi-plate-porous pollution-particle vertical isolation plate 7 in the pollution gas purifying cavity 1, and enters the breathing mask 62 through a one-way gas inhalation valve 64 from a gas inlet pipe of the breathing dividing conjoined hose 66, and then is inhaled into lungs through a nasal cavity to perform physiological exchange reactions; after the inhaled air performs the physical exchange reactions of oxygen and carbon in the lungs, the oxygen contained in the air partly enters the blood, and partly absorbs and combines with carbon in the blood and lung alveoli to become carbon dioxide, forming gases having a relatively high concentration of carbon dioxide, when the gases are pressurized and exhaled from the lung cavities, the pressure of the gases close the one-way gas inhalation valve 64 and open the one-way gas exhalation valve 65, and the gases enter the gas outlet tube of the breathing dividing conjoined hose 66, wherein the gas outlet tube of the breathing dividing conjoined hose 66 has a length longer than a length of a right tube, and extends up to the bottom of the pollution gas purifying cavity 1, therefore, the gases containing carbon dioxide only can be exhaled from a lower end, the neutralization and reduction reactions are started after the exhaled gases enter the pollution cleaning liquid, the carbonate substances generated by making carbon dioxide react with other elements in the aqueous feldspar solution remain at the bottom of the pollution gas purifying cavity 1, and these gases, after leaving a pipe orifice at the bottom, rises upwards on one hand, and is mixed with the pollution cleaning liquid on the other hand, to make the aqueous feldspar solution in the pollution cleaning liquid carry out a neutralization reaction with the carbon dioxide in exhaled lung gases, to generate solid-state carbonate substances to sink down to the bottom, and the cleaned air rises to the upper portion of the pollution gas purifying cavity 1, and is exhaled through the common opening for allowing gas to flow in and out and for adding pollution cleaning liquid 59 from a plurality of pores of a porous common opening cover 60, thus completing one respiration cycle.

The dusts, PM 10 inhalable particles, and PM 2.5 fine particles carried in the pollution gases are continuously accumulated in the sludge accumulating chamber 17, and observed through a pollution cleaning liquid quantity display tube 12 made from a transparent material. When the dirt needs to be discharged, a sludge discharge switch handle 25 is pulled to make the sludge discharge switch 12 reach a full-open state, at this time, one end of the sludge discharge switch handle 25 presses against the toggle motor switch 26 to connect the power supply with the helical shovel motor 19, and the helical shovel motor 19 rotates to drive the pollution cleaning helical shovels 18 to rotate, to force the dirt to move towards the sludge discharge transition chamber 20 to allow continuous increase of a pressure, thus forcing the dirt to be discharged from the opened sludge discharge switch 21. When discharging of the dirt is completed, the sludge discharge switch handle 25 is pulled to turn off the sludge discharge switch 12, meanwhile to cut off a circuit between the helical shovel motor 19 and the power supply so as to stop rotation, thus simultaneously to make the rotation of pollution cleaning helical shovels 18 stop, ending one dirt discharging process.

Alternatively, when the dirt concentration sensor 52 senses that the dirt should be discharged from the sludge accumulating chamber 17, the dirt concentration sensor 52 sends a signal to a microcomputer 51, the microcomputer 51, upon receiving the signal, sends an instruction to a signal inductive switch actuator 53 to manipulate the sludge discharge switch handle 25 to perform an opening action, in a later period of duration of the sludge discharge switch 21 being opened, the other end of the sludge discharge switch handle 25 will triggers the toggle motor switch 26 to make the power supply connected with the helical shovel motor 19, then, the helical shovel motor 19 drives the pollution cleaning helical shovels 18 to rotate, to push the porridge-like dirt stored at the bottom of the sludge accumulating chamber 17 towards the sludge discharge transition chamber 20, and then to discharge the same through the opened sludge discharge switch 21 to enter the a sludge receiving box 54 for storing; after the dirt has been discharged, the dirt concentration sensor 52 sends a signal to the microcomputer 51, at this time the microcomputer 51 sends a signal of closing the sludge discharge switch 21 to the signal inductive switch actuator 53, then the signal inductive switch actuator 53 makes the sludge discharge switch handle 25 perform a closing action, and the sludge discharge switch 21 is closed and does not discharge the dirt any more, meanwhile, the toggle motor switch 26 is turned off, so that a connection circuit of the helical shovel motor 19 with the power supply is cut off, and the helical shovel motor 19 and the pollution cleaning helical shovels 18 concurrently stop the rotation, completing one task of dirt discharge;
the sludge receiving box 54 is mounted in a snapping mode, and is removed to be cleaned when it is full of dirt; and
the electric pollution cleaning liquid temperature regulator 16 is mounted in a part of the pollution gas purifying cavity 1 where the pollution cleaning liquid is contained, to maintain an operation temperature of the pollution cleaning liquid; and currently, the aqueous feldspar solution is used as the pollution cleaning liquid, at a temperature of 30-40 °C.

## Claims

1. An air-purification device using a liquid reducing agent, comprising a pollution gas intake, a pollution gas purifying cavity and a clean gas exhaust opening, wherein the pollution gas purifying cavity is divided into a plurality of cavity bodies by at least one semi-plate-porous pollution-particle vertical isolation plates; a pollution cleaning liquid is contained in the pollution gas purifying cavity; the semi-plate-porous pollution-particle vertical isolation plate has one half configured for sealing, and the other half configured for making two adjacent cavity bodies in communication through pores; and the pollution gas intake and the clean gas exhaust opening are respectively located on first one and last one of the cavity bodies.

2. The air-purification device using a liquid reducing agent according to Claim 1, wherein when there is one semi-plate-porous pollution-particle vertical isolation plate, the pollution gas purifying cavity is divided into two cavity bodies; and a part of the semi-plate-porous pollution-particle vertical isolation plate located above the pollution cleaning liquid is configured for sealing, and a part of the semi-plate-porous pollution-particle vertical isolation plate located below the pollution cleaning liquid, in combination with a full-plate-porous transverse isolation plate having pores leading to below the cavity, makes the two cavity bodies in communication;
when there are more than two semi-plate-porous pollution-particle vertical isolation plates, parts of a first and a last semi-plate-porous pollution-particle vertical isolation plates located above the pollution cleaning liquid are configured for sealing, and parts of the first and the last semi-plate-porous pollution-particle vertical isolation plates located below the pollution cleaning liquid make two cavity bodies in communication in a lower portion of the cavity, and between the first and the last semi-plate-porous pollution-particle vertical isolation plates, the semi-plate-porous pollution-particle vertical isolation plates in a form of communicating in an upper part and sealing in a lower part and the semi-plate-porous pollution-particle vertical isolation plates in a form of communicating in a lower part and sealing in an upper part are alternately disposed and spaced from each other, and;
a pollution cleaning liquid quantity display tube is mounted on a side wall of the pollution gas purifying cavity; pollution cleaning liquid quantity limit marks are provided on the pollution cleaning liquid quantity display tube; and an electric pollution cleaning liquid temperature regulator is mounted in a part of the pollution gas purifying cavity in which the pollution cleaning liquid is contained;
a bottom of the pollution gas purifying cavity is connected with a sludge accumulating chamber through a full-plate-porous pollution-particle transverse isolation plate; pollution cleaning helical shovels are mounted at a bottom inside the sludge accumulating chamber; the pollution cleaning helical shovels are connected with a helical shovel motor; a sludge discharge transition chamber is connected with the bottom of the sludge accumulating chamber; a sludge discharge switch is provided at a discharge opening of the sludge discharge transition chamber; the sludge discharge switch is connected with a sludge discharge switch handle; and one end of the sludge discharge switch handle is corresponding to a toggle motor switch;
the pollution gas purifying cavity and the sludge accumulating chamber are both placed in a purification-device stored-liquid temperature-regulation tank; and
the electric pollution cleaning liquid temperature regulator and the helical shovel motor are both connected with a power supply; and the power supply is connected with an on-off electric switch, a pollution cleaning operation display lamp, a pollution cleaning stop display lamp and a toggle motor switch.

3. The air-purification device using a liquid reducing agent according to Claim 1, wherein a pollution cleaning liquid adding opening is provided at a top of the pollution gas purifying cavity.

4. The air-purification device using a liquid reducing agent according to Claim 1, wherein the cavity body connected with the pollution gas intake is a pollution gas suction cavity; a pollution gas multipath blow-pipe set is mounted in an upper portion of the pollution cleaning liquid in the pollution gas suction cavity; and
the cavity body connected with the clean gas exhaust opening is a clean gas exhaust cavity; a porous pollution-particle secondary isolation plate is mounted in an upper portion of the pollution cleaning liquid in the clean gas exhaust cavity; a pollution-particle blocking, sticking and sliding-down barrel is mounted above the porous pollution-particle secondary isolation plate; and a clean-air turning inward-rotating exit is provided at a top of the pollution-particle blocking, sticking and sliding-down barrel.

5. The air-purification device using a liquid reducing agent according to Claim 1, wherein a pollution gas pressurizer is mounted at the pollution gas intake; and
a pollution degree indicator is mounted at the pollution gas intake; a purification level indicator is mounted at the clean gas exhaust opening; and the pollution degree indicator and the purification level indicator are both connected with the power supply.

6. The air-purification device using a liquid reducing agent according to Claim 1, wherein the pollution gas intake is connected with a chimney of an external combustion engine; and the clean gas exhaust opening is connected with a gas inlet passage of the external combustion engine;
the gas inlet passage of the external combustion engine is connected with an inlet gas pre-heater; an gas inlet is provided on the inlet gas pre-heater;
alternatively, the pollution gas intake is connected with a gas exhaust pipe of an internal combustion engine; the clean gas exhaust opening is connected with a three-way dual-purpose gas exhaust pipe; an input end of a transition gas exhaust outlet of the three-way dual-purpose gas exhaust pipe is connected with an output end of the clean gas exhaust opening, an output end of the transition gas exhaust outlet is respectively connected with an outlet of the three-way dual-purpose gas exhaust pipe and an input end of an exhausted gas-pressurizing gas inlet, an output end of the exhausted gas-pressurizing gas inlet is connected with an inlet pipe of the internal combustion engine and an input end of an exhausted gas-depressurizing gas relief outlet respectively; an output end of the exhausted gas-depressurizing gas relief outlet is connected with an input end of a bridge coordinating gas-guide tube; and an output end of the bridge coordinating gas-guide tube is connected with the three-way dual-purpose gas exhaust pipe;
an exhausted-gas diverting pressurizing change-over valve is mounted between an output end of the transition gas exhaust outlet and an input end of the exhausted gas-pressurizing gas inlet; the exhausted-gas diverting pressurizing change-over valve is connected with an exhausted-gas diverting pressurizing actuator; the sludge discharge switch handle is connected with a signal inductive switch actuator;
a dirt concentration sensor is provided in the sludge accumulating chamber; the discharging opening of the sludge discharge transition chamber is corresponding to a sludge receiving box;
all of the exhausted-gas diverting pressurizing actuator, the dirt concentration sensor, and the signal inductive switch actuator are connected with a microcomputer;
all of the electric pollution cleaning liquid temperature regulator, the helical shovel motor, the exhausted-gas diverting pressurizing actuator, the dirt concentration sensor, the signal inductive switch actuator and the microcomputer are connected with the power supply; the power supply is connected with an energy recycling switch, a recycling-operation-performing display lamp, a recycling-operation-stop display lamp and a toggle motor switch; and
a switch for regularly discharging water in lubricant is provided at a bottom of the internal combustion engine.

7. The air-purification device using a liquid reducing agent according to Claim 6, wherein the internal combustion engine is embodied as a gasoline engine or a diesel engine; a gas inlet regulating valve is mounted at a gas inlet of the gasoline engine; an inlet gas pressurizing control valve and an anti-explosion coordinating gas relief valve are mounted in the bridge coordinating gas-guide tube; the gas inlet regulating valve is connected with a pedal through a gas inlet regulating valve transfer bar, and the inlet gas pressurizing control valve is connected with the pedal through an inlet gas pressurizing control valve transfer bar; a fuel injection nozzle of the diesel engine is connected with a high-pressure diesel pump, and the high-pressure diesel pump is connected with a fuel injection quantity regulating valve; and the fuel injection quantity regulating valve is connected with the pedal.

8. The air-purification device using a liquid reducing agent according to Claim 1, wherein when the pollution gas purifying cavity is fabricated to be portable, the clean gas exhaust opening of the pollution gas purifying cavity is connected with a breathing dividing conjoined hose; the breathing dividing conjoined hose is constituted of a gas inlet pipe and a gas outlet pipe, a one-way gas inhalation valve is mounted at an output end of the gas inlet pipe, a one-way gas exhalation valve is mounted at an input end of the gas outlet pipe, and the output end of the gas inlet pipe and the input end of the gas outlet pipe are both connected with a breathing mask; an input end of the gas inlet pipe is connected with the clean gas exhaust opening, and an output end of the gas outlet pipe extends into the pollution cleaning liquid; a common opening for allowing gas to flow in and out and for adding pollution cleaning liquid is provided at the pollution gas intake of the pollution gas purifying cavity; a porous common opening cover is mounted on the common opening for allowing gas to flow in and out and for adding pollution cleaning liquid; and
a strap is provided on an outer wall of the pollution gas purifying cavity; and the breathing mask is provided with a breathing mask flexible tightening belt.

9. The air-purification device using a liquid reducing agent according to Claim 1, wherein the pollution cleaning liquid is embodied as an aqueous feldspar solution or other pollution cleaning liquid for purifying pollution gases.

10. The air-purification device using a liquid reducing agent according to Claim 1, wherein when there are more than two air-purification devices using a liquid reducing agent, the clean gas exhaust opening of a former one of two adjacent air-purification devices is connected with the pollution gas intake of a latter one.

11. An operation and application method for the air-purification device using a liquid reducing agent according to Claim 1, comprising steps as follows:
(1) adding a pollution cleaning liquid into a pollution gas purifying cavity;
(2) making pollution gases enter the pollution gas purifying cavity through a pollution gas intake;
(3) the gases, from one cavity body of the pollution gas purifying cavity, entering another cavity body of the pollution gas purifying cavity, through the pollution cleaning liquid, and a semi-plate-porous pollution-particle vertical isolation plate and a full-plate-porous transverse isolation plate, with the gases passing through a lower portion of the cavity; and
(4) exhausting the pollution gases, after purified by the pollution cleaning liquid, from a clean gas exhaust opening.

12. The operation and application method for the air-purification device using a liquid reducing agent according to Claim 11, wherein the pollution cleaning liquid is added by opening a cover on a pollution cleaning liquid adding opening on the pollution gas purifying cavity and adding an appropriate amount of the pollution cleaning liquid, wherein the appropriate amount refers to an amount between an upper limit and a lower limit of pollution cleaning liquid limit quantity marks marked on a pollution cleaning liquid quantity display tube, a power supply is turned on, the pollution gas intake is placed in pollution gases, then an on-off electric switch is pressed down, a pollution cleaning operation display lamp is turned on, at this time a pollution gas pressurizer is powered on and starts rotating operation, the pollution gases enter the pollution gas pressurizer through the pollution gas intake for pressurization, and the pressurized pollution gases enter the pollution gas purifying cavity placed in a stored liquid temperature regulation tank of a purification device, and then injected into the pollution cleaning liquid by multiple paths of blow pipes of a pollution gas multipath blow-pipe set, at this time, the pollution gases and the pollution cleaning liquid are formed in a mixed state, thus, dusts, PM 10 inhalable particles, PM 2.5 fine particles, and PM 0.5 micro-particles carried in the pollution gases are humidified to expand, so as to gain weight, sink down, be aggregated, be granulated, and be agglomerated, and then sink down to a sludge accumulating chamber through a plurality of pores on a full-plate-porous pollution-particle transverse isolation plate, and dirt particles which do not sink down timely are again blocked when passing through a semi-plate-porous pollution-particle vertical isolation plate, so as to collide, be granulated, gain weight and sink down, and thus sink down to the sludge accumulating chamber through pores on the full-plate-porous pollution-particle transverse isolation plate; carbon dioxide contained in the pollution gases, during the process of mixing with the pollution cleaning liquid, undergoes neutralization and reduction reactions to form certain solid-state carbonate substances depending upon properties of the aqueous feldspar solution, which are then humidified to expand, so as to gain weight, be aggregated, sink down, be granulated, and be agglomerated, and then sink down to the sludge accumulating chamber through a plurality of pores on the full-plate-porous pollution-particle transverse isolation plate, the pollution gases after undergoing said processing procedures still are not very clean, and still carry dirt particles, the semi-clean air carrying few fine dirt particles continues flowing in the pollution cleaning liquid toward a downstream position close to an outlet, and when passing through a porous pollution-particle secondary isolation plate to enter upwards a pollution-particle blocking, sticking and sliding-down barrel, some dirt particles are partially blocked again by the porous pollution-particle secondary isolation plate and sink into the sludge accumulating chamber, and afterwards, although the pollution gases have been already quite clean, but still contain few fine dirt particles, when these fine particles move upwards together with the gases along the pollution-particle blocking, sticking and sliding-down barrel, since the pollution-particle blocking, sticking and sliding barrel is a dome-shaped cylindrical body having a larger upper opening and a smaller lower opening, fine dirt particles are blocked and stuck on an inner wall of the dome-shaped cylindrical body, gradually are increased in size, weight and amount and thereby slide down, sink down into the pollution cleaning liquid through a plurality of pores on the porous pollution-particle secondary isolation plate, and continue sinking down into the sludge accumulating chamber through a plurality of pores on the full-plate-porous pollution-particle transverse isolation plate, and clean waste gases containing precious few fine dirt particles, when rising to a top end of the pollution-particle blocking, sticking and sliding-down barrel, are turned back and blocked at a clean-air turning inward-rotating exit to rotate transversely to go out, at this time, finer dirt particles are thrown to collide and stick on an inner wall of a relevant cavity body, so as to become bigger, gain weight, and slide down into corners where the purification-device stored-liquid temperature-regulation tank and the pollution-particle blocking, sticking and sliding-down barrel join, to be accumulated; solid-state carbonate particles together with floating dusts, PM 10 inhalable particles, PM 2.5 fine particles, and PM 0.5 micro-particles are humidified, deposited and accumulated, and become a porridge-like mixture when gradually accumulated enough, the mixture is intercepted and stored in the sludge accumulating chamber, and removed through the pollution cleaning helical shovels, and clean air obtained from the pollution gases is exhausted from the clean gas exhaust opening under a pressure generated by the pollution gas pressurizer.

13. The operation and application method for the air-purification device using a liquid reducing agent according to Claim 11, wherein the waste gases exhausted from the external combustion engine and pressurized by the pollution gas pressurizer are sucked in through the pollution gas intake, the waste gases pass through an inlet gas pre-heater during a path of being sucked in, to transfer most of heat in the waste gases to air entering from gas inlets, the air obtaining the heat enters a gas inlet passage through pipes, and then enters the external combustion engine to take part in combustion; after purified in the pollution gas purifying cavity to become clean air, the waste gases are exhausted through the clean gas exhaust opening to enter the gas inlet passage of the external combustion engine, and be mixed with newly entered fresh heated air and then take part in combustion again.

14. The operation and application method for the air-purification device using a liquid reducing agent according to Claim 11, wherein the waste gases, exhausted through an exhaust pipe after the internal combustion engine is started, are sucked in through the pollution gas intake, and the waste gases, after purified in the pollution gas purifying cavity to become clean air, are exhausted through the clean gas exhaust opening and guided into a transition gas exhaust outlet, and enter a three-way dual-purpose gas exhaust pipe to be exhausted out of the engine; after the internal combustion engine is started, preheated, and stabilized, an energy recycling switch is pressed down, at this time a recycling-operation-performing display lamp is turned on, an exhausted-gas diverting pressurizing actuator works after being turned on, an exhausted-gas diverting pressurizing change-over valve is manipulated to open the exhausted gas-pressurizing gas inlet, meanwhile the transition gas exhaust outlet on the three-way dual-purpose gas exhaust pipe is closed, at this time the clean waste gases exhausted from the clean gas exhaust opening are diverted to enter the inlet pipe from the exhausted gas-pressurizing gas inlet, the clean air, as a pressurized air jet flow, is used for directly pressurization in a gas inlet stroke of the internal combustion engine, and fresh air coming from the gas inlet pipe, as being driven by the air jet flow, also flows together with the air jet flow to enter a cylinder of the internal combustion engine;
with the internal combustion engine embodied as a gasoline engine, when, the pedal is stepped down in use, a gas inlet regulating valve is driven by a gas inlet regulating valve transfer bar, so that the gas inlet regulating valve rotates from a minimum opening degree position towards a direction of a maximum opening degree position, so as to increase a gas inlet quantity and a fuel injection quantity, meanwhile, the inlet gas pressurizing control valve transfer bar connected with the pedal concurrently drives an inlet gas pressurizing control valve to rotate from a full-open position to a full-close position, and once the gas inlet regulating valve reaches the full-open position, the inlet gas pressurizing control valve reaches the full-close position;
during a process of operating the pedal for adjusting and controlling an operation state of the gasoline engine:
during speeding up at a low speed or a medium speed with the speeding-up gentle, the waster gases, after being processed to become clean, completely re-enter the cylinder through the gas inlet pipe and the gas inlet regulating valve, therefore, all the exhausted clean waste gases are completely recycled;
in the case of the medium and high speeds, as a total quantity of processed and cleaned waste gases is increased and a total quantity of newly entered fresh air is increased, when they are not able to completely enter the cylinder within a very short gas inlet stroke period due to the exceeded sum of mixed air of the waste gases and fresh air, the clean waste gases waiting to enter the cylinder are excessively accumulated in the gas inlet pipe, then the waste gases are squeezed into a bridge coordinating gas-guide tube from the exhausted gas-depressurizing gas relief outlet to enter the three-way dual-purpose gas exhaust pipe so as to be exhausted out of the engine, thus, although a little of clean waste gases are not recycled and thus wasted, an advantage is obtained that operation and working condition are well when using energy of the waste gases;
when the pedal is floored, the gas inlet regulating valve reaches the full-open position, so that a total inlet gas quantity reaches the highest, while the inlet gas pressurizing control valve at this time reaches a full-close position, so that a pressure of the recycled clean waste gases reaches the highest, a total inlet gas quantity obtained in the cylinder is very high due to that rushing of the waste gases forms an inlet gas pressure, so that a power supplied by the gasoline engine is the highest;
when all the clean waste gases completely enter the cylinder at the highest pressure, deflagration phenomenon can occur, therefore, when a critical point at which the deflagration phenomenon is able to be induced is reached, an anti-explosion coordinating gas relief valve equipped on the inlet gas pressurizing control valve is used to release some high-pressure clean waste gases to reduce the total inlet gas quantity, so as to prevent occurrence of the deflagration phenomenon of the engine, and these released clean waste gases are transferred to the three-way dual-purpose gas exhaust pipe through the bridge coordinating gas-guide tube to be exhausted out of the engine;
when the pedal is released suddenly or at a high speed from being floored and a gas inlet resistance becomes larger or rapidly becomes larger as the gas inlet regulating valve is turned down or rapidly turned down, the inlet gas pressure at the gas inlet regulating valve instantly quickly becomes larger, these clean waste gases with the larger pressure are squeezed into the bridge coordinating gas-guide tube from the exhausted gas-depressurizing gas relief outlet, at this time the inlet gas pressurizing control valve has been already in a state from semi-open position to full-open position due to releasing of the pedal, and these clean waste gases are transferred to the three-way dual-purpose gas exhaust pipe from the bridge coordinating gas-guide tube to be exhausted to the outside of the engine; and
in 5-6 minutes before the operation of the gasoline engine ends, the energy recycling switch is turned off, and a recycling-operation-stop display lamp is turned on, at this time, an exhausted-gas diverting pressurizing actuator acts to make an exhausted-gas diverting pressurizing change-over valve open a transition gas exhaust outlet, and
meanwhile close the exhausted gas-pressurizing gas inlet, so that the clean waste gases are not able to enter the gas inlet pipe and to thereby enter the cylinder, but directly enter the three-way dual-purpose gas exhaust pipe to be exhausted out of the engine.

15. The operation and application method for the air-purification device using a liquid reducing agent according to Claim 14, wherein the recycled clean air contains water of higher proportion compared with air, the water is mixed in a lubricant when running into an engine housing through an interface clearance of a piston ring, sinks down to a bottom of an oil pan when the engine is stopped to rest, and is accumulated increasingly, and when accumulated too much, a lubricant pump pumps the lubricant and water together into a lubricant path, therefore, the water accumulated at the bottom is discharged, by a switch for regularly discharging water in lubricant; the switch for regularly discharging water in lubricant communicates with a hollow oil discharge screw plug through a transparent rubber tube, and the switch for regularly discharging water in lubricant is duly opened to discharge the water.

16. The operation and application method for the air-purification device using a liquid reducing agent according to Claim 11, wherein when a clean gas exhaust opening of the pollution gas purifying cavity is connected with a breathing dividing conjoined hose, firstly a pollution cleaning liquid, *i.e.* an aqueous feldspar solution, is added through a common opening for allowing gas to flow in and out and for adding pollution cleaning liquid provided at the pollution gas intake, until a liquid level reaches a position below and close to the full-plate-porous pollution-particle transverse isolation plate; then a user carries a portable simple air-purification device on his/her back through a strap, and then wears a breathing mask; when being inhaled, polluted air enters the cavity body at one side of the semi-plate-porous pollution-particle vertical isolation plate in the pollution gas purifying cavity from the common opening for allowing gas to flow in and out and for adding pollution cleaning liquid, and is able to enter the aqueous feldspar solution only by firstly passing through a plurality of pores on the full-plate-porous pollution-particle transverse isolation plate due to that an upper portion of the semi-plate-porous pollution-particle vertical isolation plate has no pores, at this time, dusts and PM 10, PM 2.5, and PM 0.5 particles in the pollution air are humidified to expand, so as to gain weight, sink down, be granulated, be agglomerated, and sink down to a bottom of the pollution gas purifying cavity, a trace amount of carbon dioxide contained in the air, when passing through the pollution cleaning liquid, undergoes neutralization and reduction reactions with the aqueous feldspar solution as the pollution cleaning agent, to generate solid-state carbonate substances, which sink down to the bottom of the pollution gas purifying cavity after being humidified, and the pollution-cleaned air rises to the cavity body at the other side of the semi-plate-porous pollution-particle vertical isolation plate in the pollution gas purifying cavity, and enters the breathing mask through a one-way gas inhalation valve from a gas inlet pipe of the breathing dividing conjoined hose, and then is inhaled into lungs through a nasal cavity to perform physiological exchange reactions; after the inhaled air performs the physiological exchange reactions of oxygen and carbon in the lungs, oxygen contained in the air partly enters blood, and partly absorbs and combines with carbon in the blood and lung alveoli to become carbon dioxide, forming gases having a relatively high concentration of carbon dioxide, when the gases are pressurized and exhaled from lung cavities, pressure of the gases closes the one-way gas inhalation valve and opens the one-way gas exhalation valve, and the gases enter a gas outlet tube of the breathing dividing conjoined hose, wherein the gas outlet tube of the breathing dividing conjoined hose has a length longer than a length of a right tube, and extends up to the bottom of the pollution gas purifying cavity, therefore, the gases containing carbon dioxide only can be exhaled from a lower end, the neutralization and reduction reactions are started after the exhaled gases enter the pollution cleaning liquid, the carbonate substances generated by making carbon dioxide react with other elements in the aqueous feldspar solution remain at the bottom of the pollution gas purifying cavity, and these gases, after leaving a pipe orifice at the bottom, rises upwards on one hand, and, is mixed with the pollution cleaning liquid on the other hand, to make the aqueous feldspar solution in the pollution cleaning liquid perform a neutralization reaction with the carbon dioxide in exhaled lung gases, to generate solid-state carbonate substances to sink down to the bottom, and the cleaned air rises to the upper portion of the pollution gas purifying cavity, and is exhaled through the common opening for allowing gas to flow in and out and adding pollution cleaning liquid, from a plurality of pores of a porous common opening cover, thus completing one respiration cycle.

17. The operation and application method for the air-purification device using a liquid reducing agent according to Claim 11, wherein floating dusts, PM 10 inhalable particles, and PM 2.5 fine particles carried in the pollution gases are continuously accumulated in the sludge accumulating chamber, and observed through a pollution cleaning liquid quantity display tube made from a transparent material, when dirt needs to be discharged, a sludge discharge switch handle is pulled to make the sludge discharge switch reach a full-open state, at this time, one end of the sludge discharge switch handle presses against the toggle motor switch to connect the power supply with the helical shovel motor, and the helical shovel motor rotates to drive the pollution cleaning helical shovels to rotate, to force the dirt to move towards the sludge discharge transition chamber to allow continuous increase of a pressure, thus forcing the dirt to be discharged from the opened sludge discharge switch, when discharging of the dirt is completed, the sludge discharge switch handle is pulled to turn off the sludge discharge switch, and meanwhile to cut off a circuit between the helical shovel motor and the power supply so as to stop rotation, thus simultaneously to make rotation of pollution cleaning helical shovels stop, completing one dirt discharging process;
alternatively, when a dirt concentration sensor senses that the dirt should be discharged from the sludge accumulating chamber, the dirt concentration sensor sends a signal to a microcomputer, the microcomputer, upon receiving the signal, sends an instruction to a signal inductive switch actuator to manipulate the sludge discharge switch handle to perform an opening action, in a later period of duration of the sludge discharge switch being opened, the other end of the sludge discharge switch handle triggers the toggle motor switch to make the power supply connected with the helical shovel motor, then, the helical shovel motor drives the pollution cleaning helical shovels to rotate, to push porridge-like dirt stored at the bottom of the sludge accumulating chamber, towards the sludge discharge transition chamber, which is then discharged through the opened sludge discharge switch to enter a sludge receiving box for storing; after the dirt has been discharged, the dirt concentration sensor sends a signal to the microcomputer, and the microcomputer sends a signal of closing the sludge discharge switch to the signal inductive switch actuator, then the signal inductive switch actuator makes the sludge discharge switch handle perform a closing action, and the sludge discharge switch is closed and does not discharge the dirt any more, meanwhile, the toggle motor switch is turned off, so that a connection circuit of the helical shovel motor with the power supply is cut off, and the helical shovel motor and the pollution cleaning helical shovels concurrently stop the rotation, completing one task of dirt discharge;
the sludge receiving box is mounted in a snapping mode, and is removed to be cleaned when the sludge receiving box is full of dirt; and
an electric pollution cleaning liquid temperature regulator is mounted in a part of the pollution gas purifying cavity where the pollution cleaning liquid is placed, to maintain an operation temperature of the pollution cleaning liquid; and currently the aqueous feldspar solution is used as the pollution cleaning liquid, at a temperature of 30-40 °C.
